(19) **Europäisches Patentamt**
**European Patent Office**
**Office européen des brevets**

(11) **EP 3 621 935 B1**

(12) **EUROPEAN PATENT SPECIFICATION**

(45) Date of publication and mention
of the grant of the patent:
**08.11.2023 Bulletin 2023/45**

(21) Application number: **18728967.3**

(22) Date of filing: **10.05.2018**

(51) International Patent Classification (IPC):
**C04B 35/111** *(2006.01)* **C04B 35/117** *(2006.01)*
**C04B 35/01** *(2006.01)*

(52) Cooperative Patent Classification (CPC):
**C04B 35/111; C04B 35/01; C04B 35/117;**
C04B 2235/3206; C04B 2235/3217;
C04B 2235/3222; C04B 2235/3224;
C04B 2235/3227; C04B 2235/3229;
C04B 2235/3232; C04B 2235/3244;
C04B 2235/3287; C04B 2235/3418; C04B 2235/42;
C04B 2235/5409; (Cont.)

(86) International application number:
**PCT/IB2018/053267**

(87) International publication number:
**WO 2018/207132 (15.11.2018 Gazette 2018/46)**

(54) **ARTICLES COMPRISING CERAMICS AND METHOD OF MAKING THE SAME**

ARTIKEL MIT KERAMIK UND VERFAHREN ZUR HERSTELLUNG DAVON

ARTICLES COMPRENANT DES CÉRAMIQUES ET LEUR PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2017 US 201762505377 P
07.05.2018 US 201862667985 P**

(43) Date of publication of application:
**18.03.2020 Bulletin 2020/12**

(73) Proprietor: **3M Innovative Properties Company**
**St. Paul, MN 55133-3427 (US)**

(72) Inventors:
• **ROSENFLANZ, Anatoly Z.**
**Saint Paul**
**Minnesota 55133-3427 (US)**
• **ANDERSON, Jason D.**
**Saint Paul**
**Minnesota 55133-3427 (US)**
• **SHANTI, Noah O.**
**Saint Paul**
**Minnesota 55133-3427 (US)**

• **STOLZENBURG, Fabian**
**Saint Paul**
**Minnesota 55133-3427 (US)**
• **TANGEMAN, Jean A.**
**Saint Paul**
**Minnesota 55133-3427 (US)**

(74) Representative: **Mathys & Squire**
**Theatinerstraße 7**
**80333 München (DE)**

(56) References cited:
**WO-A1-01/56948 WO-A1-02/08146**
**US-A- 5 326 519 US-A1- 2005 137 078**

(52) Cooperative Patent Classification (CPC): (Cont.)
C04B 2235/5418; C04B 2235/5427;
C04B 2235/5445; C04B 2235/549; C04B 2235/604;
C04B 2235/65; C04B 2235/6562; C04B 2235/6567;
C04B 2235/658; C04B 2235/6582; C04B 2235/76;
C04B 2235/78; C04B 2235/80; C04B 2235/85;
C04B 2235/96

**Description**

Cross Reference To Related Applications

This application claims the benefit of U.S. Provisional Patent Application Numbers 62/667985, filed May 7, 2018, and 62/505377, filed May 12, 2017.

Background

A large number of amorphous (including glass) and glass-ceramic compositions are known. The majority of oxide glass systems utilize well-known glass-formers such as $SiO_2$, $B_2O_3$, $P_2O_5$, $GeO_2$, $TeO_2$, $As_2O_3$, and $V_2O_5$ to aid in the formation of the glass. Some of the glass compositions formed with these glass-formers can be heat-treated to form glass-ceramics. The upper use temperature of glasses and glass-ceramics formed from such glass formers is generally less than 1200°C, typically about 700-800°C. The glass-ceramics tend to be more temperature resistant than the glass from which they are formed. In addition, many properties of known glasses and glass-ceramics are limited by the intrinsic properties of glass-formers. For example, for $SiO_2$, $B_2O_3$, and $P_2O_5$-based glasses and glass-ceramics, the Young's modulus, hardness, and strength are limited by such glass-formers. Such glass and glass-ceramics generally have inferior mechanical properties as compared, for example, to $Al_2O_3$ or $ZrO_2$. Glass-ceramics having mechanical properties similar to that of $Al_2O_3$ or $ZrO_2$ would be desirable.

Shaping of ceramics into parts with intricate geometries is a laborious and expensive process. While many green body techniques such as pill-pressing, injection molding, slip-casting, gel-casting etc., have been devised, the issues associated with sintering to full densities (such as shrinkage, warpage, and cracking) remain. In practice, many ceramic articles are machined into a final shape in a fully dense state. Typically, the final surface finish is produced by grinding and polishing; various surface structures are also machined in. Machining and finishing in many cases can add up to 50% of a final cost of a ceramic and, therefore, undesirable. Novel ways to make near-net shaped parts with a minimum subsequent finishing are actively sought after.

Various pressure-assisted consolidation methods are known in the art and include hot-pressing, die-extrusion, hot-isostatic pressing, sinter-forging and variations of thereof. These consolidation methods are assisted by application of external force either directly through the use of punches as in hot-pressing, die-extrusion and sinter-forging, or indirectly through gas pressurization of a sealed container as in hot-isostatic pressing. In the latter method, the material to be consolidated is placed in a metal or glass container and evacuated and sealed from an atmosphere. The sealed material is mechanical pressed thereby isostatically pressurizing the container with gas and causing the container to shrink.

Glasses exhibiting glass transition temperature, $T_g$, can be successfully consolidated from glass powders into an article and, if desired, reshaped by heating to temperatures between $T_g$-$T_x$ range ($T_x$ is crystallization temperature) (see, e.g., U.S. Pat. No. 7,625,509 (Rosenflanz et al.)). In many instances, conversion of glasses to glass-ceramics is accompanied by shrinkage which is often undesirable. US 2005/137078 discloses fused polycrystalline material comprising aluminum oxide and yttrium oxide.

US 2005/137078 discloses fused polycrystalline material comprises aluminum oxide and yttrium oxide.

US 2005/137078 discloses fused polycrystalline material comprises aluminum oxide and yttrium oxide.

Summary

Surprisingly, Applicants have discovered methods for making articles comprising crystalline materials from nanocrystalline glass-ceramics, thus eliminating the majority of, or at least significantly reducing, shrinkage associated from glass to glass-ceramic conversion.

The present disclosure describes a ceramic comprising polycrystalline zirconia, a first polycrystalline rare earth aluminate, a second, different polycrystalline rare earth aluminate, and an amorphous phase comprising, on a theoretical oxides basis, $SiO_2$, $Al_2O_3$, and rare earth oxide, wherein the polycrystalline zirconia and the first and second polycrystalline rare earth aluminate comprise crystals with grain boundaries, wherein the crystals of the first crystalline rare earth aluminate are acicular, and wherein the amorphous phase is present at the grain boundaries.

In this application:

"bend radius" is determined by cross-sectioning a 3D sample using a low-speed diamond saw (obtained under the trade designation "TECHCUT 4" from Allied High Tech Products Inc., Rancho Dominguez, CA). The cross-section is mounted in a mounting resin (available from Buehler Ltd., Lake Bluff, IL, under the trade designation "EPOMET"). The resulting cylinder of resin was about 2.5 centimeter (1 inch) in diameter and about 1.9 centimeter (0.75 inch) tall (i.e., high). The mounted sample is polished using a conventional grinder/polisher (available from Buehler Ltd., under the trade designation "BETA") and conventional diamond slurries with the final polishing step using a 1 micrometer diamond slurry (available from Buehler Ltd., under the trade designation "METADI") to obtain polished cross-sections of the sample. The sample is the placed under an optical microscope (available under the trade designation "VHX" from Keyence, Osaka, Japan) and imaged. A circle is fitted to the curved ceramic using the available under the trade designation "KEYENCE" from Keyence, where the radius of the circle that fits the bent region of the ceramic is the bend radius.

"ceramic" includes amorphous material, glass, crystalline ceramic, glass-ceramic, and combinations thereof;

"complex metal oxide" refers to a metal oxide comprising two or more different metal elements and oxygen (e.g., $CeAl_{11}O_{18}$, $Dy_3Al_5O_{12}$, $MgAl_2O_4$, and $Y_3Al_5O_{12}$);

"complex $Al_2O_3$·metal oxide" refers to a complex metal oxide comprising, on a theoretical oxide basis, $Al_2O_3$ and one or more metal elements other than Al (e.g., $CeAl_{11}O_{18}$, $Dy_3Al_5O_{12}$, $MgAl_2O_4$, and $Y_3Al_5O_{12}$);

"complex $Al_2O_3$·REO" refers to a complex metal oxide comprising, on a theoretical oxide basis, $Al_2O_3$ and rare earth oxide (e.g., $CeAl_{11}O_{18}$ and $Dy_3Al_5O_{12}$);

"complex $Al_2O_3$·$Y_2O_3$" refers to a complex metal oxide comprising, on a theoretical oxide basis, $Al_2O_3$ and $Y_2O_3$ (e.g., $Y_3Al_5O_{12}$);

"glass" refers to amorphous material exhibiting a glass transition temperature;

"glass-ceramic" refers to ceramic comprising crystals formed by heat-treating amorphous material;

"$T_g$" refers to the glass transition temperature as determined by the test described herein entitled "Differential Thermal Analysis;"

"$T_x$" refers to the crystallization temperature as determined by the test described herein entitled "Differential Thermal Analysis;"

"rare earth oxides" refers to cerium oxide (e.g., $CeO_2$), dysprosium oxide (e.g., $Dy_2O_3$), erbium oxide (e.g., $Er_2O_3$), europium oxide (e.g., $Eu_2O_3$), gadolinium (e.g., $Gd_2O_3$), holmium oxide (e.g., $Ho_2O_3$), lanthanum oxide (e.g., $La_2O_3$), lutetium oxide (e.g., $Lu_2O_3$), neodymium oxide (e.g., $Nd_2O_3$), praseodymium oxide (e.g., $Pr_6O_{11}$), samarium oxide (e.g., $Sm_2O_3$), terbium (e.g., $Tb_2O_3$), thorium oxide (e.g., $Th_1O_7$), thulium (e.g., $Tm_2O_3$), and ytterbium oxide (e.g., $Yb_2O_3$), and combinations thereof; and

"REO" refers to rare earth oxide(s).

Further, it is understood herein that unless it is stated that a metal oxide (e.g., $Al_2O_3$, complex $Al_2O_3$-metal oxide, etc.) is crystalline, for example, in a glass-ceramic, it may be amorphous, crystalline, or portions amorphous and portions crystalline. For example if a glass-ceramic comprises $Al_2O_3$ and $ZrO_2$, the $Al_2O_3$ and $ZrO_2$ may each be in an amorphous state, crystalline state, or portions in an amorphous state and portions in a crystalline state, or even as a reaction product with another metal oxide(s) (e.g., unless it is stated that, for example, $Al_2O_3$ is present as crystalline $Al_2O_3$ or a specific crystalline phase of $Al_2O_3$ (e.g., alpha $Al_2O_3$), it may be present as crystalline $Al_2O_3$ and/or as part of one or more crystalline complex $Al_2O_3$·metal oxides).

Further, it is understood that glass-ceramics formed by heating amorphous material not exhibiting a $T_g$ may not actually comprise glass, but rather may comprise the crystals and amorphous material that does not exhibit a $T_g$.

The ceramic can be made, for example, by a method comprising:

providing a ceramic preform having a volume, a first shape, the ceramic preform comprising polycrystalline zirconia, a first polycrystalline rare earth aluminate, a second, different polycrystalline rare earth aluminate, and an amorphous phase comprising, on a theoretical oxides basis, $SiO_2$, $Al_2O_3$, and rare earth oxide;
providing a major surface;
placing at least a portion of the preform in contact with the major surface; and
heating the preform at sufficient temperature and sufficient pressure to form the article having a second, different (i.e., a 3D article with at least two edges) shape.

Advantages of methods described herein may include enablement of continuous processing of ceramic sheets using small weights and minimal undesired shape changes during processing (e.g., shrinkage due to phase transformations or warping). Crystallization of a glass-ceramic material from the glass phase to the glass-ceramic phase can in some cases be accompanied by a strong exothermic event (as evident in a differential thermal analysis (DTA) scan) and significant amount of volume change (e.g., greater than 5% in any dimension) due to the elimination of the free space of the glass upon crystallization. Such volume change can in turn result in micro- or macro-crack formation or even total fracture of an article. Surprisingly, Applicants have discovered it is therefore advantageous to perform the consolidation and/or reshaping process in the glass-ceramic state after crystallization (or major crystallization) events have occurred in order to minimize the potential for undesirable effects such as shrinkage, warping, and/or cracking.

Exemplary articles made by a method described herein include electronics enclosure (e.g., a watch case, cellular phone case, or a tablet case).

Brief Description of the Drawings

FIG. 1 is a perspective view of an exemplary molding apparatus useful in some embodiments described herein.

FIG. 2 is a perspective view of the exemplary molding apparatus shown in FIG. 1 having a preform positioned in at least a portion of the mold cavity.

FIG. 3 is a perspective view of an exemplary article formed from the exemplary molding apparatus shown in FIG. 1.

FIG. 4 is a perspective view of another exemplary article formed from the exemplary molding apparatus shown in FIG. 1.

FIG. 5 is a perspective view of another exemplary article formed from the exemplary molding apparatus shown in FIG. 1.

FIG. 6 shows differential thermal analysis (DTA) scans of heat treated beads (line 601) and glass beads (line 602) of Example 1.

FIGS. 7A and 7B are Scanning Transmission Electron Microscope (STEM) Bright Field Digital Images of a focused ion-beam milled section of the heat-treated Example 6 material.

FIG. 8 is shows the composition of the amorphous intergranular phase of Example 6 as determined by energy dispersive X-ray spectroscopy (EDXS).

Detailed Description

The ceramic comprises polycrystalline zirconia, a first polycrystalline rare earth aluminate (e.g., at least one of $LaAlO_3$, $CeAlO_3$, $Er_3Al_5O_{12}$, $GdAlO_3$, or $Dy_3Al_5O_{12}$), a second, different polycrystalline rare earth aluminate (e.g., at least one of $LaAl_{11}O_{18}$ or $CeAl_{11}O_{18}$), and an amorphous phase comprising, on a theoretical oxides basis, $SiO_2$, $Al_2O_3$, and rare earth oxide, wherein the polycrystalline zirconia and the first and second polycrystalline rare earth aluminate comprise crystals with grain boundaries, wherein the crystals of the first crystalline rare earth aluminate are acicular, and wherein the amorphous phase is present at the grain boundaries.

In some embodiments of the ceramic described herein, the polycrystalline zirconia is percent, on a theoretical oxides basis, in an amount of at least 10 (in some embodiments, at least 20, 25, 30, or even at least 40; in some embodiments, in a range from 10 to 40, 10 to 30, or even 10 to 25) percent by weight, based on the total weight of the ceramic. In some embodiments of the second ceramic described herein, the first polycrystalline rare earth aluminate is percent, on a theoretical oxides basis, in an amount of at least 30 (in some embodiments, at least 40, 50, 60, 70, or even at least 75; in some embodiments, in a range from 30 to 75 or even 40 to 45) percent by weight, based on the total weight of the ceramic. In some embodiments of the second ceramic described herein, the second polycrystalline rare earth aluminate is percent, on a theoretical oxides basis, in an amount of at least 15 (in some embodiments, at least 20, 25, 30, 35, or even at least 40; in some embodiments, in a range from 15 to 40, or even 20 to 30) percent by weight, based on the total weight of the ceramic.

In some embodiments of the ceramic described herein, the first rare earth aluminate comprises crystals having an average size of at least 50 (in some embodiments, at least 100, 150, 200, 250, or even at least 500) nanometers.

The average crystal size of a ceramic can be determined by the line intercept method according to the ASTM standard E1 12-96 "Standard Test Methods for Determining Average Grain Size." The sample is mounted in mounting resin (such as that obtained under the trade designation "TRANSOPTIC POWDER" from Buehler, Lake Bluff, IL) typically in a cylinder of resin about 2.5 cm in diameter and about 1.9 cm high. The mounted section is prepared using conventional polishing techniques using a polisher (such as that obtained from Buehler under the trade designation "ECOMET 3"). The sample is polished for about 3 minutes with a diamond wheel, followed by 5 minutes of polishing with each of 45, 30, 15, 9, 3, and 1-micrometer slurries. The mounted and polished sample is sputtered with a thin layer of gold-palladium and viewed using a scanning electron microscopy (such as the JEOL SEM Model JSM 840A). A typical back-scattered electron (BSE) micrograph of the microstructure found in the sample is used to determine the average crystal size as follows. The number of crystals that intersect per unit length ($N_L$) of a random straight line drawn across the micrograph are counted. The average crystal size is determined from this number using the following equation.

$$\text{Average Crystal Size} = 1.56 \text{ x } N_L M,$$

where $N_L$ is the number of crystals intersected per unit length and M is the magnification of the micrograph.

In some embodiments of the ceramic described herein, the second rare earth aluminate comprises crystals having an average size of at least 200 nanometers (in some embodiments, at least 250 nanometers, 300 nanometers, 400 nanometers, 500 nanometers 1000 nanometers, or even 5 micrometers; in some embodiments, in a range from 200 nanometers to 5 micrometers, or even 400 nanometers to 2 micrometers).

In some embodiments of the ceramic described herein, the amorphous phase is present, on a theoretical oxides basis, in an amount of at least 1 (in some embodiments, at least 2, 3, 4, 5, 10, 15, or even at least 20; in some embodiments, in a range from 1 to 20, 1 to 15, 1 to 10, or even 1 to 5) percent by weight, based on the total weight of the ceramic.

In some embodiments of the ceramic described herein contains not greater than 20 (in some embodiments, not greater than 15, 10, 5, 4, 3, 2, or even not greater than 1; in some embodiments, in a range from 1 to 20, 1 to 15, or even 1 to 10) wt.% collectively, on a theoretical oxides basis, $B_2O_3$, $GeO_2$, $P_2O_5$, and $SiO_2$, based on the total weight of the ceramic.

In some embodiments of the ceramic described herein, the amorphous phase comprises $Y_2O_3$-$Al_2O_3$-$SiO_2$.

In some embodiments of the ceramic described herein, the amorphous phase comprises, on a theoretical oxides basis, at least 5 (in some embodiments, at least 10, 20, 25, 30, 40, or even at least 50; in some embodiments, in a range from 5 to 50, 10 to 40, or even 20 to 35) percent by weight at least at least one of $B_2O_3$, $GeO_2$, $P_2O_5$, or $SiO_2$, based on the total weight of the ceramic.

In some embodiments of the ceramic described herein comprise crystals having an average size not greater than 100 (in some embodiments, not greater 90, 85, 80, 75, 70, 65, 60, 55, 50, 45, 40, 35, 30, 25, or even not greater than 20) nanometers.

In some embodiments of the ceramic described herein comprise at least 90 (in some embodiments, at least 91, 92, 92.5, 93, 94, 95, 96, 97, 97.5, 98, 99, 99.5, 99.6, 99.7, 99.8, or even at least 99.9) percent by volume crystals not greater than 100 (in some embodiments, not greater 90, 85, 80, 75, 70, 65, 60, 55, 50, 45, 40, 35, 30, 25, or even not greater than 20) nanometers in size, based on the total volume of the ceramic.

In some embodiments of the ceramic described herein consist essentially of crystals having an average size not greater than 100 (in some embodiments, not greater 90, 85, 80, 75, 70, 65, 60, 55, 50, 45, 40, 35, 30, 25, or even not greater than 20) nanometers.

In some embodiments of the ceramic described herein comprise crystals having an average size greater than 100 (in some embodiments, greater 150, 175, or even greater than 200) nanometers.

In some embodiments of the ceramic described herein comprise at least 90 (in some embodiments, at least 91, 92, 92.5, 94, 95, 96, 97, 97.5, 98, 99, 99.5, 99.6, 99.7, 99.8, or even at least 99.9) percent by volume crystals having an average size greater than 50 (in some embodiments, greater 75, 100, 150, or even greater than 200) nanometers, based on the total volume of the glass-ceramic article.

In some embodiments of the ceramic described herein have x, y, and z dimensions each perpendicular to each other, wherein each of the x, y, and z dimensions is at least 0.3 (in some embodiments at least 0.4, 0.5, 1, 2, 3, 4 or even at least 5) millimeters. In some embodiments, the x and y dimensions are at least 1, 2, 3, 4, or even at least 5 millimeters, and the z dimension is at least 0.1, 0.2, 0.3, 0.4 or even at least 0.5 millimeter. The x, y, and z dimensions of a material are determined either visually or using microscopy, depending on the magnitude of the dimensions. The reported z dimension is, for example, the diameter of a sphere, the thickness of a coating, or the longest length of a prismatic shape.

In some embodiments of the ceramic described herein pass the "Flow Property Test." The "Flow Property Test" is conducted as follows for a flat portion of a sheet. A flat portion of a sample is cut and placed into a rectangular 3-dimensional (3D) graphite mold about 80 x 60 millimeter on the outside and 44 × 58 millimeter on the inside with a beveled edge with a radius of curvature of $B_f$ (graphite available from Mersen, St. Marys, PA, and machined to provide the specified inside dimensions). The mold with the sample to be tested in it, is placed inside a hot press in a $N_2$ environment (available from Thermal Technology Inc., Brea, CA, under the trade designation "HP-50"). A 1-kilogram rod of carbon (3-inch (7.6 cm) rod, 4 inches (10.2 cm) tall, available from Mersen), is placed on the mold. The sample is then heated to 1350°C at 10°C/minute and held at 1350°C for 90 minutes under $N_2$ flow (40 cm$^3$/minute)) to protect the graphite mold. The sample is cooled in the mold at a rate of 10°C/minute to room temperature. The cooled mold/sample is removed from the furnace and the sample removed from the mold. The bend radius $C_f$ ("heated bend radius") of the heated sample is measured. The sample passes the Flow Property Test if the heated bend radius $C_f$ is less than 1.5 times of radius of curvature $B_f$.

The "Flow Property Test" is conducted as follows for a curved portion of a sheet. A sample having an initial bend radius a $A_c$ mm greater than zero is cut and placed into a rectangular 3D graphite mold about $80 \times 60$ millimeter on the outside and $44 \times 58$ millimeter on the inside with a beveled edge with a radius of curvature of $B_c$ such that bend radius $A_c$ is at least 3 times that of radius of curvature $B_c$ (graphite available from Mersen and machined to provide the specified inside dimensions). The mold with the sample to be tested in it, is placed inside a hot press in a $N_2$ environment ("HP-50"). A 1-kilogram rod of carbon (3-inch (7.6 cm) rod, 4 inches (10.2 cm) tall, available from Mersen), is placed on the mold. The sample is then heated to 1350°C at 10°C/minute and held at 1350°C for 90 minutes under $N_2$ flow (40 cm$^3$/minute)) to protect the graphite mold. The sample is cooled in the mold at a rate of 10°C/minute to room temperature. The cooled mold/sample is removed from the furnace and the sample removed from the mold. The bend radius $C_c$ ("heated bend radius") of the heated sample is measured. The sample passes the Flow Property Test if the heated bend radius C is less than 1.5 times of radius of curvature $B_c$.

In some embodiments of the ceramic described herein are in the form of a three-dimensional ceramic article, wherein the article has at least one portion having a bend radius of at 1 (in some embodiments, at least 2, 3, 4, 5, 10, 15, 20, 25, 30, or even at least 40; in some embodiments, in a range from 1 to 40, 1 to 30, 1 to 25, 1 to 20, 1 to 10, or even 5 to 10) mm, wherein the article has a thickness of at least 0.3 (in some embodiments, at least 0.4, 0.5, 0.6, 0.7, 0.8. 0.9, 1, or even at least 1.5; in some embodiments, in a range from 0.3 to 1.5, 0.3 to 1, or even 0.4 to 0.8) mm.

In some embodiments, ceramics described herein have an average microhardness, based on 20 measurements, of at least 10 (in some embodiments, at least 11, 12, 13, 14, 15, 16, 17, or even at least 18; in some embodiments, in a range from 10 to 18, or even 12 to 15) GPa. The average microhardness of the glass-ceramic and/or crystalline ceramic can be determined as follows. Sections of the material are mounted in mounting resin (available under the trade designation "TRANSOPTIC POWDER" from Buehler, Ltd., Lake Bluff, IL) typically in a cylinder of resin about 2.5 cm in diameter and about 1.9 cm high. The mounted section is prepared using conventional polishing techniques using a polisher (available from Buehler, Ltd. under the trade designation "ECOMET 3"). The sample is polished for about 3 minutes with a diamond wheel, followed by 5 minutes of polishing with each of 45, 30, 15, 9, 3, and 1-micrometer slurries. The microhardness measurements are made using a conventional microhardness tester (available under the trade designation "MITUTOYO MVK-VL" from Mitutoyo Corporation, Tokyo, Japan) fitted with a Vickers indenter using a 100-gram indent load. The microhardness measurements are made according to the guidelines stated in ASTM Test Method E384 Test Methods for Microhardness of Materials (1991).

In some embodiments, ceramics described herein have a flexural strength of at least 500 (in some embodiments, at least 600, 700, 800, 900, 1000, 1200, or even at least 1500; in some embodiments, in a range from 500 to 1500, or even 700 to 1200) MPa. The flexural strength is determined as follows. A 20-mm disk is prepared by placing 9 grams of the heat-treated beads, in a circular graphite die with an outside diameter of 160 millimeters, an inside diameter of 20 millimeters, and a height of 100 millimeters (graphite obtained from Mersen), and then machined to the specified inside dimensions). The die is then hot-pressed in a glass press (obtained under the trade designation "GMP", Toshiba, Tokyo, Japan) and heated to 880°C at 40°C/ minute, under a pressure of 15000 Nm held for 10 minutes, before cooling to room temperature with active nitrogen cooling. The resulting disc is sliced into 0.8 mm thick discs using a low-speed diamond saw (available under the trade designation "TECHCUT 4," Allied High Tech Products Inc., Rancho Dominguez, CA). The discs are heated using the following profile: 20°C to 830°C at 3°C/minute, held at 830°C for 2 hours, 830°C to 875°C at 1°C/minute, held at 875°C for 2 hours, 875°C to 900°C at 1°C/minute, held at 900°C for 2 hours, 900°C to 1000°C at 1°C/minute, held at 1000°C for 1 hour, 1000°C to 1400°C at 3°C/minute, held at 1400°C for 1 hour, and 1400°C to 20°C at 3°C/minute. The glass-ceramic discs are polished for about 3 minutes with a diamond wheel, followed by three minutes of polishing with each of 45, 30, 15, 9, and 3-micrometer diamond slurries. The strength is measured using the biaxial flexure strength. The lower side is placed on a support consisting of three steel balls, 3 mm diameters, spaced at 120° intervals, on a circle with a diameter of 8 mm. The support and samples are placed in a fixture with a vertical punch that rests on the center of the upper side of the sample. The punch diameter in contact with the wafer is 1.8 mm. The fixture is loaded in a universal test machine (identified as "Series 1101" from Applied Test Systems, Inc., Butler, PA). The punch is pushed into the wafer at a rate of 0.2 mm per minute until the sample fractures. The load at fracture is recorded. The strength value is calculated from the following formula:

$$S = -0.2387 P(X-Y)/d^2$$

where:

P=load at fracture in Newtons

$$X = (1+v)\ln(r_2/r_3)^2 + [(1-v)/2](r_2/r_3)^2$$

$$Y = (1+v)[1 + \ln(r_1/r_3)^2] + (1-v)/(r_1/r_3)^2$$

in which:

v=Poisson's ratio

$r_1$=the radius of the support circle in mm

$r_2$=the radius of the upper punch contact in mm

$r_3$=the radius of the sample in mm

d=the thickness of the sample in mm.

In some embodiments, ceramics described herein are in the form of an article having any exposed surface having an average surface roughness, $R_a$, less than 20 nm. The average surface roughness, $R_a$, is determined using a white light interferometer ("CONTOUR ELITE X8"). A polished area of ceramic of at least 5 mm by 5 mm is placed under the 5X optical lens at 0.5 x magnification. A 5 micrometer back scan is performed in the x-y plane using white light. To achieve a large enough area (i.e., 10 millimeters x 10 millimeters), an array of 100 $1 \times 1$ mm$^2$ images are stitched together. Software available under the trade designation "THE MOUNTAINSMAP UNIVERSAL" calculates the average surface roughness, $R_a$.

In some embodiments of the ceramic described herein have an outer surface that is as-molded (as compared to a machined surface).

In some embodiments of the ceramic described herein have a matte surface finish.

The ceramic can be made, for example, by a method comprising:

providing a ceramic preform having a volume, a first shape, the ceramic preform comprising polycrystalline zirconia, a first polycrystalline rare earth aluminate (e.g., $LaAl_{11}O_{18}$), a second, different polycrystalline rare earth aluminate (e.g., $LaAlO_3$), and an amorphous phase comprising, on a theoretical oxides basis, $SiO_2$, $Al_2O_3$, and rare earth oxide;
providing a major surface;
placing at least a portion of the preform in contact with the major surface; and
heating the preform at sufficient temperature and sufficient pressure to form the article having a second, different (i.e., a 3D article with at least two edges) shape.

In some embodiments of the exemplary method for making the ceramic described herein, the preform comprises acicular crystals of the first rare earth aluminate (in some embodiments, at least 15 (in some embodiments, at least 20, 25, 30, 35, or even at least 40; in some embodiments, in a range from 15 to 40, or even 20 to 30) percent by weight of the first rare earth aluminate, based on the total weight of the ceramic preform).

In some embodiments of the exemplary method for making the ceramic described herein, the first and second rare earth aluminates of the preform each comprise crystals having an average size of at least 200 nanometers (in some embodiments, at least 250 nanometers, 300 nanometers, 400 nanometers, 500 nanometers, 1000 nanometers, or even 5 micrometers; in some embodiments, in a range from 200 nanometers to 5 micrometers, or even 400 nanometers to 2 micrometers).

In some embodiments of methods for making the ceramics described herein, the method further comprises providing a second major surface opposing the first major surface; and placing at least a portion of the preform into contact with the second major surface. In some embodiments, the first shape is planar.

In some embodiments of methods for making the ceramics described herein, the heating is conducted in a range from 1000°C to 1500°C (in some embodiments, in a range from 1050°C to 1450°C, 1100°C to 1400°C, 1150°C to 1400°C, or even 1200°C to 1400°C). In some embodiments of methods for making the ceramics described herein, at least a portion of the heating is conducted at pressure at least 0.1 (in some embodiments, at least 0.2, 0.5, 1, 5, 10, 25, 50, 100, or even at least 200; in some embodiments, in a range from 0.1 to 200, 0.2 to 200, 0.5 to 200, 1 to 200, 5 to 200, or even 10 to 200) MPa. In some embodiments of methods for making the ceramics described herein, the heating is conducted for a time of at least 30 seconds (in some embodiments, at least 45 seconds, 1 minute, or even at least 1 hour; in some embodiments, in a range from 30 seconds to 1 hour, 45 seconds to 1 hour, or even 1 minute to 1 hour).

Preforms for making ceramics described herein can be made for, example, from glass-ceramic particulate having the applicable composition.

Glass-ceramic particulate, including nanocrystalline glass-ceramic particulate, can be provided by techniques known in the art. Glass-ceramic particulate, including nanocrystalline glass-ceramic (e.g., particulate) can be provided by heat-treating amorphous material (e.g., glass) of the appropriate composition such that the amorphous material converts to a glass-ceramic.

Exemplary oxides, on a theoretical oxides basis, comprising the glass-ceramic, including nanocrystalline glass-ceramic, and/or crystalline ceramic include $Al_2O_3$, $Y_2O_3$, $ZrO_2$, $HfO_2$, $Ga_2O_3$, REO, $Bi_2O_3$, MgO, $Nb_2O_5$, $Ta_2O_5$, CaO, BaO, or at least one transition metal oxide (e.g., oxides of Sc, Ti, V, Cr, Mn, Fe, Co, Ni, Cu, and Zn, $B_2O_3$, $GeO_2$, $SiO_2$, $TeO_2$, $As_2O_3$, $P_2O_5$, $TeO_2$, and complex metal oxides thereof).

In some embodiments, the glass-ceramic, including nanocrystalline glass-ceramic, and/or crystalline ceramic comprises, on a theoretical oxides basis, $Al_2O_3$ (in some embodiments, at least 20, 25, 30, 35, 40, 45, 50, 55, 60, 65, 70, 75, 80, or even at least 85; in some embodiments, in a range from 20 to 85, 25 to 85, 35, to 85, or even 50 to 85 percent by weight $Al_2O_3$, based on the total weight of the glass-ceramic and/or crystalline ceramic, respectively).

In some embodiments, the glass-ceramic, including nanocrystalline glass-ceramic, and/or crystalline ceramic comprises, on a theoretical oxides basis, at least two of $Al_2O_3$, $Y_2O_3$, $ZrO_2$, $HfO_2$, $Ga_2O_3$, REO, $Bi_2O_3$, MgO, $Nb_2O_5$, $Ta_2O_5$, CaO, BaO, or at least one transition metal oxide (e.g., oxides of Sc, Ti, V, Cr, Mn, Fe, Co, Ni, Cu, and Zn, and complex metal oxides thereof).

In some embodiments, the nanocrystalline glass-ceramic and/or crystalline ceramic comprises, on a theoretical oxides basis, $Al_2O_3$, REO, and at least one of $ZrO_2$ or $HfO_2$. In some embodiments, the glass-ceramic, including nanocrystalline glass-ceramic, and/or crystalline ceramic collectively comprises, on a theoretical oxides basis, at least 80 (in some embodiments, at least 85, 90, 95, 96, 97, 98, 99, 99.5, or even 100) percent by weight of the $Al_2O_3$, REO, and at least one of $ZrO_2$ or $HfO_2$, based on the total weight of the glass-ceramic and/or crystalline ceramic, respectively.

In some embodiments, the glass-ceramic, including nanocrystalline glass-ceramic, and/or crystalline ceramic comprises, on a theoretical oxides basis, $Al_2O_3$, $Y_2O_3$, and at least one of $ZrO_2$ or $HfO_2$. In some embodiments, the glass-ceramic, including nanocrystalline glass-ceramic, and/or crystalline ceramic collectively comprises, on a theoretical oxides basis, at least 80 (in some embodiments, at least 85, 90, 95, 96, 97, 98, 99, 99.5, or even 100) percent by weight of the $Al_2O_3$, $Y_2O_3$, and at least one of $ZrO_2$ or $HfO_2$, based on the total weight of the glass-ceramic and/or crystalline ceramic, respectively.

In some embodiments, the glass-ceramic, including nanocrystalline glass-ceramic, and/or crystalline ceramic collectively comprises, on a theoretical oxides basis, not more than 20 (in some embodiments, 15, 10, 5, 4, 3, 2, 1, or even 0) percent by weight $As_2O_3$, $B_2O_3$, $GeO_2$, $P_2O_5$, $SiO_2$, $TeO_2$, and $V_2O_5$ based on the total weight of the glass-ceramic and/or crystalline ceramic, respectively.

In some embodiments, the glass-ceramic, including nanocrystalline glass-ceramic, and/or crystalline ceramic comprises at least one complex metal oxide (e.g., a complex $Al_2O_3$·metal oxide, a complex $Al_2O_3$·REO, and/or a complex $Al_2O_3$·$Y_2O_3$).

In some embodiments, the glass-ceramic, including nanocrystalline glass-ceramic, and/or crystalline ceramic contains, on a theoretical oxides basis, no greater than 20 (in some embodiments, no greater than 10, 5, 4, 3, 2, 1, or even 0) percent by weight $SiO_2$, based on the total weight of the glass-ceramic and/or crystalline ceramic, respectively.

In some embodiments, the nanocrystalline glass-ceramic and/or crystalline ceramic collectively contains, on a theoretical oxides basis, less than 20 (in some embodiments, less than 15, 10, 5, 4, 3, 2, 1, or even 0) percent by weight $SiO_2$, $B_2O_3$, and $P_2O_5$, based on the total weight of the glass-ceramic and/or crystalline ceramic, respectively.

Suitable glass-ceramic particulate can be provided by techniques known in the in art. U.S. Pat. Nos. 7,563,294 (Rosenflanz), 7,501,000 (Rosenflanz et al.), 7,501,001 (Rosenflanz et al.), 7,168,267 (Rosenflanz et al.), 7,101,819 (Rosenflanz et al.), 7,147,544 (Rosenflanz), 7,510,585 (Rosenflanz), 7,563,293 (Rosenflanz), 7,737,063 (Rosenflanz), 7,507,268 (Rosenflanz), 8,056,370 (Rosenflanz et al.), 7,497,093 (Rosenflanz), 8,003,217 (Rosenflanz), 7,297,171 (Rosenflanz), 7,598,188 (Rosenflanz et al.), 7,281,970 (Endres et al.); U.S. Pat. Appl. Pub. Nos. 2007/0256454 (Rosenflanz et al.), 2007/0270299 (Rosenflanz et al.), and 2011/0253582 (Lenius et al.); and Rosenflanz et al., "Bulk Glasses and Ultrahard Nanoceramics Based on Alumina and Rare-Earth Oxides", Nature 430, 761-64 (2004) report exemplary glass compositions that can be crystallized to provide the glass-ceramic, including nanocrystalline glass-ceramic particulate. Exemplary glass-ceramic particulate or preforms can also be obtained by other techniques, such as direct melt casting, melt atomization, containerless levitation, laser spin melting, and other methods known to those skilled in the art (see, e.g., Rapid Solidification of Ceramics, Brockway et al., Metals And Ceramics Information Center, A Department of Defense Information Analysis Center, Columbus, OH, January, 1984).

Metal oxides that may be used to form the glass-ceramic particulate or preform include $Al_2O_3$; $TiO_2$; $Y_2O_3$; rare earth oxides (REOs) such as $CeO_2$, $Dy_2O_3$, $Er_2O_3$, $Eu_2O_3$, $Gd_2O_3$, $Ho_2O_3$, $La_2O_3$, $Lu_2O_3$, $Nd_2O_3$, $Pr_6O_{11}$, $Sm_2O_3$, $Tb_2O_3$, $Th_4O_7$, $Tm_2O_3$ and $Yb_2O_3$; $ZrO2$, $HfO_2$, $Ta_2O_5$, $Nb_2O_5$, $Bi_2O_3$, $WO_3$, $V_2O_5$, $Ga_2O_3$, and alkaline earth metal oxides (e.g., CaO and BaO). Examples of useful glass for carrying out the present disclosure include those comprising $REO-TiO_2$, $REO-ZrO_2-TiO_2$, $REO-Nb_2O_5$, $REO-Ta_2O_5$, $REO-Nb_2O_5-ZrO_2$, $REO-Ta_2O_5-ZrO_2$, $CaO-Nb_2O_5$, $CaO-Ta_2O_5$, $BaO-TiO_2$, $REO-Al_2O_3$, $REO-Al_2O_3-ZrO_2$, $REO-Al_2O_3-ZrO_2-SiO_2$, $Y_2O_3-Al_2O_3-ZrO_2$, $Y_2O_3-Al_2O_3-ZrO_2-SiO_2$, and $SrO-Al_2O_3-ZrO_2$ glasses. Useful glass formulations include those at or near a eutectic composition. In addition to these compositions and compositions also see, for example, U.S. Pat. Nos. 7,563,294 (Rosenflanz), 7,501,000 (Rosenflanz et al.), 7,501,001 (Rosenflanz et al.), 7,168,267 (Rosenflanz et al.), 7,101,819 (Rosenflanz et al.), 7,147,544 (Rosenflanz), 7,510,585 (Rosenflanz), 7,563,293 (Rosenflanz), 7,737,063 (Rosenflanz), 7,507,268 (Rosenflanz), 8,056,370 (Rosenflanz et al.), 7,497,093 (Rosenflanz), 8,003,217 (Rosenflanz), 7,297,171 (Rosenflanz), 7,598,188 (Rosenflanz et al.), 7,281,970 (Endres et al.); U.S. Pat. Appl. Pub. Nos. 2007/0256454 (Rosenflanz et al.), 2007/0270299 (Rosenflanz et al.), and 2011/0253582 (Lenius et al.); and Rosenflanz et al., "Bulk glasses and ultrahard nanoceramics based on alumina and rare-earth oxides", Nature 430, 761-64 (2004) other compositions, including eutectic compositions, will be apparent to those skilled in the art after reviewing the present disclosure.

Additional examples of useful compositions for carrying out this disclosure may be found in U.S. Pat. No. 2,150,694 (Morey); Topol, L.E. et al, "Formation of new oxide glasses by laser spin melting and free fall cooling", J. Non-Crystal. Solids, 12, 377-390 (1973); Topol, L.E., "Formation of new lanthanide oxide glasses by laser spin melting and free-fall cooling," J. Non-Crystall. Solids, 15, 116-124 (1974); Shishido T., et al, in "Ln-M-O" glasses obtained by rapid quenching using laser beam, J. Mater. Sci., 13, 1006-1014 (1978); and Tatsumisago M. in "Infrared Spectra of Rapidly Quenched Glasses in the Systems, Li2O-RO-Nb2O5 (R=Ba, Ca, Mg)," J. Amer. Ceram. Soc., Vol. 66, No. 2, pp. 117-119 (1983).

Amorphous materials (e.g., glasses), ceramics comprising the amorphous material, particles comprising the amorphous material, etc., that can be used as, or to provide glass-ceramic particulate, can be made, for example, by heating (including in a flame) the appropriate metal oxide sources to form a melt, desirably a homogenous melt, and then rapidly cooling the melt to provide amorphous material. Embodiments of amorphous materials can be made, for example, by melting the metal oxide sources in any suitable furnace (e.g., an inductive heated furnace, a gas-fired furnace, or an electrical furnace), or, for example, in a plasma. The resulting melt is cooled (e.g., discharging the melt into a cooling media (e.g., high velocity air jets, liquids, metal plates (including chilled metal plates), metal rolls (including chilled metal rolls), and metal balls (including chilled metal balls)).

Embodiments of amorphous material can be made utilizing flame fusion as disclosed, for example, in U.S. Pat. No. 6,254,981 (Castle). In this method, the metal oxide source materials are fed (e.g., in the form of particles, sometimes referred to as "feed particles") directly into a burner (e.g., a methane-air burner, an acetylene-oxygen burner, a hydrogen-oxygen burner, and like), and then quenched, for example, in water, cooling oil, or air. Feed particles can be formed, for example, by grinding, agglomerating (e.g., spray-drying), melting, or sintering the metal oxide sources. The size of feed particles fed into the flame generally determine the size of the resulting amorphous material comprising particles.

Embodiments of amorphous materials can also be obtained by other techniques, such as: laser spin melt with free-fall cooling, Taylor wire technique, plasmatron technique, hammer and anvil technique, centrifugal quenching, air gun splat cooling, single roller and twin roller quenching, roller-plate quenching and pendant drop melt extraction (see, e.g., Rapid Solidification of Ceramics, Brockway et al., Metals And Ceramics Information Center, A Department of Defense Information Analysis Center, Columbus, OH, January, 1984). Embodiments of amorphous materials may also be obtained by other techniques, such as: thermal (including flame or laser or plasma-assisted) pyrolysis of suitable precursors, physical vapor synthesis (PVS) of metal precursors and mechanochemical processing.

Useful amorphous material formulations include those at or near a eutectic composition(s) (e.g., binary and ternary eutectic compositions). In addition to compositions disclosed herein, other compositions, including quaternary and other higher order eutectic compositions, may be apparent to those skilled in the art after reviewing the present disclosure.

Sources, including commercial sources, of, on a theoretical oxide basis, $Al_2O_3$ include bauxite (including both natural occurring bauxite and synthetically produced bauxite), calcined bauxite, hydrated aluminas (e.g., boehmite, and gibbsite), aluminum, Bayer process alumina, aluminum ore, gamma alumina, alpha alumina, aluminum salts, aluminum nitrates, and combinations thereof. The $Al_2O_3$ source may contain, or only provide, $Al_2O_3$. Alternatively, the $Al_2O_3$ source may contain, or provide $Al_2O_3$, as well as at least one metal oxide other than $Al_2O_3$ (including materials of or containing complex $Al_2O_3$·metal oxides (e.g., $Dy_3Al_5O_{12}$, $Y_3Al_5O_{12}$, $CeAl_{11}O_{18}$, etc.)).

Sources, including commercial sources, of rare earth oxides include rare earth oxide powders, rare earth metals, rare earth-containing ores (e.g., bastnasite and monazite), rare earth salts, rare earth nitrates, and rare earth carbonates. The rare earth oxide(s) source may contain, or only provide, rare earth oxide(s). Alternatively, the rare earth oxide(s) source may contain, or provide rare earth oxide(s), as well as one or more metal oxides other than rare earth oxide(s) (including materials containing complex rare earth oxide and other metal oxides (e.g., $Dy_3Al_5O_{12}$, $CeAl_{11}O_{18}$, etc.).

Sources, including commercial sources, on a theoretical oxide basis, $Y_2O_3$ include yttrium oxide powders, yttrium, yttrium-containing ores, and yttrium salts (e.g., yttrium carbonates, nitrates, chlorides, hydroxides, and combinations thereof). The $Y_2O_3$ source may contain, or only provide, $Y_2O_3$. Alternatively, the $Y_2O_3$ source may contain, or provide $Y_2O_3$, as well as one or more metal oxides other than $Y_2O_3$ (including materials containing complex $Y_2O_3 \cdot$metal oxides (e.g., $Y_3Al_5O_{12}$)).

Sources, including commercial sources, on a theoretical oxide basis, of $ZrO_2$ include zirconium oxide powders, zircon sand, zirconium, zirconium-containing ores, and zirconium salts (e.g., zirconium carbonates, acetates, nitrates, chlorides, hydroxides, and combinations thereof). In addition, or alternatively, the $ZrO_2$ source may contain, or provide $ZrO_2$, as well as other metal oxides such as $HfO_2$. Sources, including commercial sources, on a theoretical oxide basis, of $HfO_2$ include hafnium oxide powders, hafnium, hafnium-containing ores, and hafnium salts. In addition, or alternatively, the $HfO_2$ source may contain, or provide $HfO_2$, as well as other metal oxides such as $ZrO_2$.

Other useful metal oxide may also include, on a theoretical oxide basis, BaO, CaO, $Cr_2O_3$, CoO, $Fe_2O_3$, $GeO_2$, $Li_2O$, MgO, MnO, NiO, $Na_2O$, $Sc_2O_3$, SrO, $TiO_2$, ZnO, and combinations thereof. Sources, including commercial sources, include the oxides themselves, complex oxides, ores, carbonates, acetates, nitrates, chlorides, hydroxides, etc. These metal oxides are added to modify a physical property of the resulting particles and/or improve processing. These metal oxides are typically added anywhere from 0% to 50% (in some embodiments, 0% to 25%) by weight of the glass-ceramic depending, for example, upon the desired property.

The particular selection of metal oxide sources and other additives for making ceramics according to the present disclosure typically takes into account, for example, the desired degree of crystallinity, if any, the desired physical properties (e.g., hardness or toughness) of the resulting ceramics, avoiding or minimizing the presence of undesirable impurities, the desired characteristics of the resulting ceramics, and/or the particular process (including equipment and any purification of the raw materials before and/or during fusion and/or solidification) being used to prepare the ceramics.

In some instances, it may be desirable to incorporate limited amounts, on a theoretical oxides basis, other oxides such as $Na_2O$, $P_2O_5$, $SiO_2$, $TeO_2$, $V_2O_3$, and combinations thereof. Sources, including commercial sources, include the oxides themselves, complex oxides, ores, carbonates, acetates, nitrates, chlorides, hydroxides, etc. These metal oxides may be added, for example, to modify a physical property of the resulting particles and/or improve processing. These metal oxides when used are typically are added from greater than 0% to 20% (in some embodiments, greater than 0% to 15%, 0% to 10%, 0% to 5%, or even 0% to 2%) by weight of the glass-ceramic depending, for example, upon the desired property.

In some embodiments, it may be advantageous for at least a portion of a metal oxide source (in some embodiments, at least 10, 15, 20, 25, 30, 35, 40, 45, or even at least 50 percent by weight) to be obtained by adding particulate, metallic material comprising at least one of a metal (e.g., Al, Ca, Cu, Cr, Fe, Li, Mg, Ni, Ag, Ti, Zr, and combinations thereof), M, that has a negative enthalpy of oxide formation or an alloy thereof, to the melt, or otherwise melt them with the other raw materials. Although not wanting to be bound by theory, it is believed that the heat resulting from the exothermic reaction associated with the oxidation of the metal is beneficial in the formation of a homogeneous melt and resulting amorphous material. For example, it is believed that the additional heat generated by the oxidation reaction within the raw material eliminates or minimizes insufficient heat transfer, and hence facilitates formation and homogeneity of the melt, particularly when forming amorphous particles with x, y, and z dimensions over 150 micrometers. Although not wanting to be bound by theory, it is also believed that the availability of the additional heat aids in driving various chemical reactions and physical processes (e.g., densification, and spheroidization) to completion. Further, although not wanting to be bound by theory, it is believed for some embodiments, the presence of the additional heat generated by the oxidation reaction actually enable the formation of a melt, which otherwise is difficult or otherwise not practical due to high melting point of the materials.

The addition of certain metal oxides may alter the properties and/or crystalline structure or microstructure of the glass-ceramic and/or crystalline material, as well as the processing of the raw materials and intermediates in making the glass-ceramic. For example, oxide additions such as MgO, CaO, $Li_2O$, and $Na_2O$ have been observed to alter both the $T_g$ (for a glass) and $T_x$ (wherein $T_x$ is the crystallization temperature) of amorphous material. Although not wishing to be bound by theory, it is believed that such additions influence glass formation. Further, for example, such oxide additions may decrease the melting temperature of the overall system (i.e., drive the system toward lower melting eutectic), and ease of amorphous material-formation. Complex eutectics in multi component systems (quaternary, etc.) may result in better amorphous material-forming ability. The viscosity of the liquid melt and viscosity of the glass in its "working" range may also be affected by the addition of certain metal oxides such as MgO, CaO, $Li_2O$, and $Na_2O$. It is also within the scope of the present disclosure to incorporate at least one of halogens (e.g., fluorine and chlorine), or chalcogenides (e.g., sulfides, selenides, and tellurides) into the amorphous materials, and the glass-ceramics made therefrom.

Crystallization of the amorphous material and ceramic comprising the amorphous material may also be affected by the additions of certain materials. For example, certain metals, metal oxides (e.g., titanates and zirconates), and fluorides, for example, may act as nucleation agents resulting in beneficial heterogeneous nucleation of crystals. Also, addition of some oxides may change nature of metastable phases devitrifying from the amorphous material upon reheating. In another aspect, for ceramics comprising crystalline $ZrO_2$, it may be desirable to add metal oxides (e.g., $Y_2O_3$, $TiO_2$, CaO, and MgO) that are known to stabilize tetragonal/cubic form of $ZrO_2$.

The particular selection of metal oxide sources and other additives typically takes into account, for example, the desired composition and microstructure of the resulting ceramics, the desired degree of crystallinity, if any, the desired physical properties (e.g., hardness or toughness) of the resulting ceramics, avoiding or minimizing the presence of undesirable impurities, the desired characteristics of the resulting ceramics, and/or the particular process (including equipment and any purification of the raw materials before and/or during fusion and/or solidification) being used to prepare the ceramics.

The metal oxide sources and other additives can be in any form suitable to the process and equipment being used to make the glass-ceramics. The raw materials can be melted and quenched using techniques and equipment known in the art for making oxide amorphous materials and amorphous metals. Desirable cooling rates include those of 50K/s and greater. Cooling techniques known in the art include roll-chilling. Roll-chilling can be carried out, for example, by melting the metal oxide sources at a temperature typically 20°C to 200°C higher than the melting point, and cooling/quenching the melt by spraying it under high pressure (e.g., using a gas such as air, argon, or nitrogen) onto a high-speed rotary roll(s). Typically, the rolls are made of metal and are water cooled. Metal book molds may also be useful for cooling/quenching the melt.

Other techniques for forming melts, cooling/quenching melts, and/or otherwise forming amorphous material include vapor phase quenching, melt-extraction, plasma spraying, and gas or centrifugal atomization. Vapor phase quenching can be carried out, for example, by sputtering, wherein the metal alloys or metal oxide sources are formed into a sputtering target(s) which are used. The target is fixed at a predetermined position in a sputtering apparatus, and a substrate(s) to be coated is placed at a position opposing the target(s). Typical pressures of $10^{-3}$ torr of oxygen gas and Ar gas, discharge is generated between the target(s) and a substrate(s), and Ar or oxygen ions collide against the target to start reaction sputtering, thereby depositing a film of composition on the substrate.

Gas atomization involves melting feed particles to convert them to melt. A thin stream of such melt is atomized through contact with a disruptive air jet (i.e., the stream is divided into fine droplets). The resulting substantially discrete, generally ellipsoidal amorphous material comprising particles (e.g., beads) are then recovered. Examples of bead sizes include those having a diameter in a range of about 5 micrometers to about 3 mm. Melt-extraction can be carried out, for example, as disclosed in U.S. Pat. No. 5,605,870 (Strom-Olsen et al.). Containerless glass forming techniques utilizing laser beam heating as disclosed, for example, in PCT Pub. No. WO 01/27046 A1, published April 4, 2001 may also be useful in making the glass-ceramics.

The cooling rate is believed to affect the properties of the quenched amorphous material. For instance, glass transition temperature, density and other properties of glass typically change with cooling rates.

Rapid cooling may also be conducted under controlled atmospheres, such as a reducing, neutral, or oxidizing environment to maintain and/or influence the desired oxidation states, etc. during cooling. The atmosphere can also influence amorphous material formation by influencing crystallization kinetics from undercooled liquid. For example, larger undercooling of $Al_2O_3$ melts without crystallization has been reported in argon atmosphere as compared to that in air.

The microstructure or phase composition (glassy/amorphous/crystalline) of a material can be determined in a number of ways. Various information can be obtained, for example, using optical microscopy, electron microscopy, differential thermal analysis (DTA), and x-ray diffraction (XRD).

Using optical microscopy, amorphous material is typically predominantly transparent due to the lack of light scattering centers such as crystal boundaries, while polycrystalline material shows a crystalline structure and is opaque due to light scattering effects.

A percent amorphous yield can be calculated for beads using a -100+120 mesh size fraction (i.e., the fraction collected between 150-micrometer opening size and 125-micrometer opening size screens). The measurements are done in the following manner. A single layer of beads is spread out upon a glass slide. The beads are observed using an optical microscope. Using the crosshairs in the optical microscope eyepiece as a guide, beads that lay along a straight line are counted either amorphous or crystalline depending on their optical clarity. A total of 500 beads are counted and a percent amorphous yield is determined by the amount of amorphous beads divided by total beads counted.

Using DTA, the material is classified as amorphous if the corresponding DTA trace of the material contains an exothermic crystallization event ($T_x$). If the same trace also contains an endothermic event ($T_g$) at a temperature lower than $T_x$ it is considered to consist of a glass phase. If the DTA trace of the material contains no such events, it is considered to contain crystalline phases.

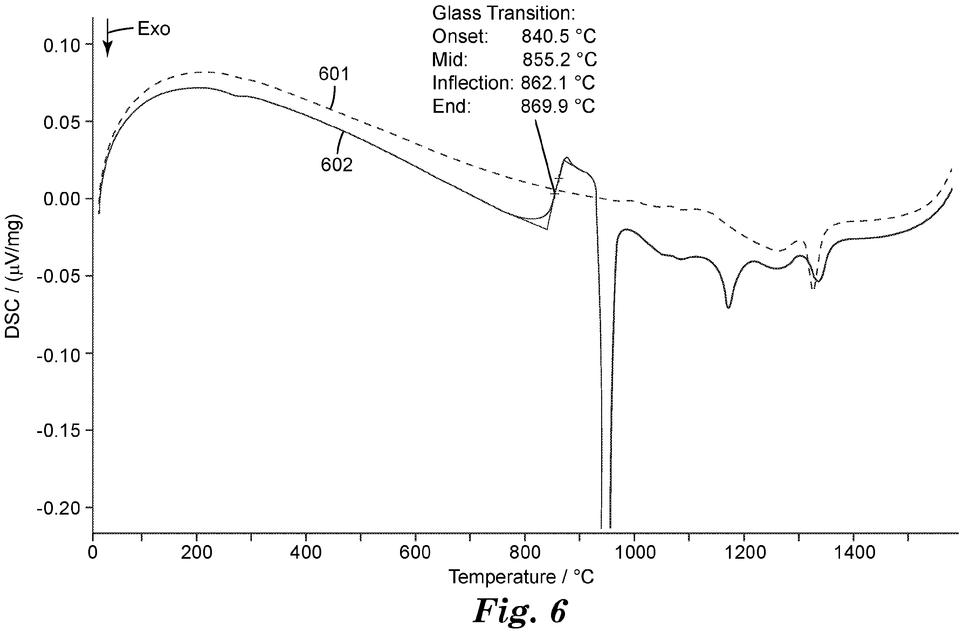

Differential thermal analysis (DTA) can be conducted using the following method. DTA runs can be made (using an instrument such as that obtained from Netzsch Instruments, Selb, Germany, under the trade designation "NETZSCH STA 409 DTA/TGA") using a -140+ 170 mesh size fraction (i.e., the fraction collected between 105-micrometer opening size and 90-micrometer opening size screens). An amount of each screened sample (typically about 400 milligrams (mg)) is placed in a 100-microliter $Al_2O_3$ sample holder. Each sample is heated in static air at a rate of 10°C/minute from room temperature (about 25°C) to 1100°C. A glass transition temperature, $T_g$, is evident as an endothermic peak in a DTA scan according "Differential Thermal Analysis" in the Examples; the absence of an endothermic event indicates the absence of a glass transition (see, e.g., line 601 in FIG. 6).

Using powder x-ray diffraction, XRD, (using an x-ray diffractometer such as that obtained under the trade designation "PHILLIPS XRG 3100" from Phillips, Mahwah, NJ, with copper $K_{\alpha 1}$ radiation of 1.54050 Angstrom) the phases present in a material can be determined by comparing the peaks present in the XRD trace of the crystallized material to XRD patterns of crystalline phases provided in JCPDS (Joint Committee on Powder Diffraction Standards) databases, published by International Center for Diffraction Data. Furthermore, an XRD can be used qualitatively to determine types of phases. The presence of a broad diffused intensity peak is taken as an indication of the amorphous nature of a material. The existence of both a broad peak and well-defined peaks is taken as an indication of existence of crystalline matter within an amorphous matrix.

The initially formed amorphous material or ceramic (including glass prior to crystallization) may be larger in size than that desired. The amorphous material or ceramic can be converted into smaller pieces using crushing and/or comminuting techniques known in the art, including roll crushing, canary milling, jaw crushing, hammer milling, ball milling, jet milling, and impact crushing. In some instances, it is desired to have at least two crushing steps. For example, after the ceramic is formed (solidified), it may be in the form of larger than desired material. The first crushing step may involve crushing these relatively large masses or "chunks" to form smaller pieces. This crushing of these chunks may be accomplished with a hammer mill, impact crusher or jaw crusher. These smaller pieces may then be subsequently crushed to produce the desired particle size distribution. In order to produce the desired particle size distribution, it may be necessary to perform multiple crushing steps. In general, the crushing conditions are optimized to achieve the desired particle shape(s) and particle size distribution. Resulting particles that are of the desired size may be recrushed if they are too large, or "recycled" and used as a raw material for re-melting if they are too small.

A preform may be formed, for example, by pouring or forming the melt into a mold, cool, and then crystallizing the resulting at least partially amorphous material. A preform may be formed, for example, by coalescing. Coalescing in essence forms a larger sized body from at least two smaller particles. For example, amorphous material comprising particles may be formed into a larger particle size. The temperature and pressure used for coalescing may depend, for example, upon composition of the amorphous material and the desired density of the resulting material. The temperature should be below the glass crystallization temperature, $T_x$, and for glasses, greater than the glass transition temperature. In some embodiments, the heating is conducted at at least one temperature in a range of about 850°C to about 1100°C (in some embodiments, about 900°C to 1000°C). Typically, the amorphous material is under pressure (e.g., greater than zero to at least 1 GPa) during coalescence to aid the coalescence of the amorphous material. In one exemplary embodiment, a charge of particles is placed into a die and hot-pressing is performed at temperatures above glass transition where viscous flow of glass leads to coalescence into a relatively large body. Examples of typical coalescing techniques include hot pressing, hot isostatic pressure, and hot extrusion. Typically, it is generally desirable to cool the resulting coalesced body before further heat treatment. After heat treatment, if so desired, the coalesced body may be crushed to smaller particle sizes or a desired particle size distribution.

It is also within the scope of the present disclosure to conduct additional heat-treatment to further improve desirable properties of the material. For example, hot-isostatic pressing may be conducted (e.g., at temperatures from about 900°C to about 1400°C) to remove residual porosity, increasing the density of the material.

Coalescence of the amorphous material and/or glass-ceramic (e.g., particles) may also be accomplished by a variety of methods, including pressureless or pressure sintering (e.g., sintering, plasma assisted sintering, hot pressing, HIPing, hot forging, and hot extrusion).

Heat-treatment can be carried out in any of a variety of ways, including those known in the art for heat-treating amorphous material, e.g., glass) to provide the glass-ceramics. For example, heat-treatment can be conducted in batches, for example, using resistive, inductively or gas heated furnaces. Alternatively, for example, heat-treatment can be conducted continuously, for example, using rotary kilns. In the case of a rotary kiln, the material is fed directly into a kiln operating at the elevated temperature. The time at the elevated temperature may range from a few seconds (in some embodiments, even less than 5 seconds) to a few minutes to several hours. The temperature may range anywhere from 900°C to 1600°C, typically between 1200°C to 1500°C. It is also within the scope of the present disclosure to perform some of the heat-treatment in batches (e.g., for the nucleation step) and another continuous (e.g., for the crystal growth) step and to achieve the desired density. For the nucleation step, the temperature typically ranges between about 900°C to about 1100°C (in some embodiments, about 925°C to about 1050°C). Likewise, for the density step, the temperature typically is in a range from about 1100°C to about 1600°C (in some embodiments, about 1200°C to about 1500°C). This heat treatment may occur, for example, by feeding the material directly into a furnace at the elevated temperature. Alternatively, for example, the material may be fed into a furnace at a much lower temperature (e.g., room temperature) and then heated to desired temperature at a predetermined heating rate. It is within the scope of the present disclosure to conduct heat-treatment in an atmosphere other than air. In some cases, it might be even desirable to heat-treat in a reducing atmosphere(s). Also, for, example, it may be desirable to heat-treat under gas pressure as in, for example, hot-isostatic press, or in gas pressure furnace.

The amorphous material is heat-treated to at least partially crystallize the amorphous material to provide glass-ceramic. The heat-treatment of certain glasses to form glass-ceramics is well known in the art. The heating conditions to nucleate and grow glass-ceramics are known for a variety of glasses. Alternatively, one skilled in the art can determine the appropriate conditions from a Time-Temperature-Transformation (TTT) study of the glass using techniques known in the art. One skilled in the art, after reading the disclosure and the art should be able to provide TTT curves for the particular amorphous material, determine the appropriate nucleation and/or crystal growth conditions to provide the glass-ceramic.

Typically, glass-ceramics are stronger than the amorphous materials from which they are formed. Hence, the strength of the material may be adjusted, for example, by the degree to which the amorphous material is converted to crystalline ceramic phase(s). Alternatively, or in addition, the strength of the material may also be affected, for example, by the number of nucleation sites created, which may in turn be used to affect the number, and in turn the size of the crystals of the crystalline phase(s). For additional details regarding forming glass-ceramics, see, for example Glass-Ceramics, P. W. McMillan, Academic Press, Inc., 2nd edition, 1979.

For example, during heat-treatment of some exemplary amorphous materials for making the glass-ceramics, formation of phases such as $La_2Zr_2O_7$, and, if $ZrO_2$ is present, cubic/tetragonal $ZrO_2$, in some cases monoclinic $ZrO_2$, have been observed at temperatures above about 900°C. Although not wanting to be bound by theory, it is believed that zirconia-related phases are the first phases to nucleate from the amorphous material. Formation of $Al_2O_3$, $ReAlO_3$ (wherein Re is at least one rare earth cation), $ReAl_{11}O_{18}$, $Re_3Al_5O_{12}$, $Y_3Al_5O_{12}$, etc. phases are believed to generally occur at temperatures above about 925°C. Typically, crystallite size during this nucleation step is on order of nanometers. For example, crystals as small as 10-15 nanometers have been observed. For at least some embodiments, heat-treatment at about 1300°C for about 1 hour provides a full crystallization. In general, heat-treatment times for each of the nucleation and crystal growth steps may range from a few seconds (in some embodiments, even less than 5 seconds) to several minutes to an hour or more.

The size of the resulting crystals can typically be controlled at least in part by the nucleation and/or crystallization times and/or temperatures. Although it is generally desirable to have small crystals (e.g., on the order of not greater than a micrometer, or even not greater than a nanometer) glass-ceramics may be made with larger crystal sizes (e.g., at least 1-10 micrometers, at least 10-25 micrometers, or at least 50-100 micrometers). Although not wanting to be bound by theory, it is generally believed in the art that the finer the size of the crystals (for the same density), the higher the mechanical properties (e.g., hardness and strength) of the ceramic.

Examples of crystalline phases which may be present in embodiments of glass-ceramics according to the present disclosure include, on a theoretical oxides basis: $Al_2O_3$ (e.g., alpha-$Al_2O_3$), $Y_2O_3$, REO, $HfO_2$, $ZrO_2$ (e.g., cubic $ZrO_2$ and tetragonal $ZrO_2$), BaO, CaO, $Cr_2O_3$, CoO, $Fe_2O_3$, $GeO_2$, $Li_2O$, MgO, MnO, NiO, $Na_2O$, $P_2O_5$, $Sc_2O_3$, $SiO_2$, SrO, $TeO_2$, $TiO_2$, $V_2O_3$, $Y_2O_3$, ZnO, "complex metal oxides" (including "complex $Al_2O_3$-metal oxide" (e.g., complex $Al_2O_3$-REO (e.g., $ReAlO_3$ (e.g., $GdAlO_3 \cdot LaAlO_3$), $ReAl_{11}O_{18}$ (e.g., $LaAl_{11}O_{18}$), and $Re_3Al_5O_{12}$ (e.g., $Dy_3Al_5O_{12}$)), complex $Al_2O_3 \cdot Y_2O_3$ (e.g., $Y_3Al_5O_{12}$), and complex $ZrO_2 \cdot REO$ (e.g., $Re_2Zr_2O_7$ (e.g., $La_2Zr_2O_7$))), and combinations thereof.

It is also within the scope of the present disclosure to substitute a portion of the yttrium and/or aluminum cations in a complex $Al_2O_3 \cdot$ metal oxide (e.g., complex $Al_2O_3 \cdot Y_2O_3$ (e.g., yttrium aluminate exhibiting a garnet crystal structure)) with other cations. For example, a portion of the Al cations in a complex $Al_2O_3 \cdot Y_2O_3$ may be substituted with at least one cation of an element selected from the group consisting of: Cr, Ti, Sc, Fe, Mg, Ca, Si, Co, and combinations thereof. For example, a portion of the Y cations in a complex $Al_2O_3 \cdot Y_2O_3$ may be substituted with at least one cation of an element selected from the group consisting of: Ce, Dy, Er, Eu, Gd, Ho, La, Lu, Nd, Pr, Sm, Th, Tm, Yb, Fe, Ti, Mn, V, Cr, Co, Ni, Cu, Mg, Ca, Sr, and combinations thereof. Similarly, it is also within the scope of the present disclosure to substitute a portion of the aluminum cations in alumina. For example, Cr, Ti, Sc, Fe, Mg, Ca, Si, and Co can substitute for aluminum in the alumina. The substitution of cations as described above may affect the properties (e.g. hardness, toughness, strength, thermal conductivity, etc.) of the fused material.

It is also within the scope of the present disclosure to substitute a portion of the rare earth and/or aluminum cations in a complex $Al_2O_3 \cdot$ metal oxide (e.g., complex $Al_2O_3 \cdot REO$) with other cations. For example, a portion of the Al cations in a complex $Al_2O_3 \cdot REO$ may be substituted with at least one cation of an element selected from the group consisting of: Cr, Ti, Sc, Fe, Mg, Ca, Si, Co, and combinations thereof. For example, a portion of the Y cations in a complex $Al_2O_3 \cdot REO$ may be substituted with at least one cation of an element selected from the group consisting of: Y, Fe, Ti, Mn, V, Cr, Co, Ni, Cu, Mg, Ca, Sr, and combinations thereof. Similarly, it is also within the scope of the present disclosure to substitute a portion of the aluminum cations in alumina. For example, Cr, Ti, Sc, Fe, Mg, Ca, Si, and Co can substitute for aluminum in the alumina. The substitution of cations as described above may affect the properties (e.g. hardness, toughness, strength, thermal conductivity, etc.) of the fused material.

Typically, the nanocrystalline glass-ceramic particulate has an average particle size of at least 20 (in some embodiments, at least 25, 30, 35, 40, 45, 50, 55, 60, 65, 70, or even 75; in some embodiments, in a range from 20 to 150, 50 to 120, 75 to 120, or even 75 to 100) micrometers.

Further, in regard to the preform, the preform has a volume that approximates the finished product volume (i.e., within 30%). For example, the preform can be formed in a separate operation that focuses on the quality and consistency of the preform (e.g., elimination of defects associated with coalescing operations).

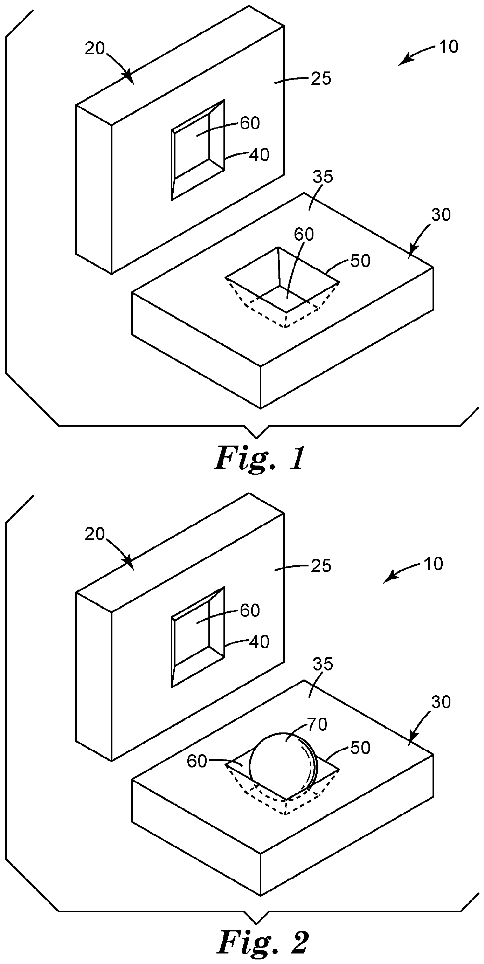

FIG. 1 is a perspective view of an exemplary molding apparatus useful in some embodiments of the present disclosure. As shown in FIG. 1, mold apparatus 10 comprises first mold portion 20 and second mold portion 30. First mold portion 20 has mold surface 25 with recessed portion 40. Second mold portion 30 has mold surface 35 with recessed portion 50. When mold surface 25 of first mold portion 20 and mold surface 35 of second mold portion 30 are aligned and contacted, a cavity is formed having a void volume.

FIG. 2 is a perspective view of the exemplary molding apparatus shown in FIG. 1 with a preform staged for reshaping, for example to provide a bend radius of at least 1 (in some embodiments, at least 2, 3, 4, 5, 10, 15, 20, 25, 30, or even at least 40; in some embodiments, in a range from 1 to 40, 1 to 30, 1 to 25, 1 to 20, 1 to 10, or even 5 to 10) mm. As shown in FIG. 2, preform 70 is positioned in at least a portion of recessed portion 50 of second mold portion 30. After inserting preform 70 in the mold apparatus 10, mold surface 25 and mold surface 35 are positioned opposite one another and a force is applied to maintain contact between preform 70 and each of recessed portions 40, 50. Preform 70 is then subjected to heating while pressure is applied to molding apparatus 10 to force mold surfaces 25, 35 toward one another. The heating and applied pressure cause preform 70 to deform and generally assume the shape of mold cavity 60.

The molding apparatus and the hot-pressing equipment used to apply heat and pressure can be any variety known to those skilled in the art. In some embodiments, at least a portion of the surface of the mold is prepared to provide an optically smooth surface to the reshaped article using techniques known to those skilled in the art. In some embodiments, at least a portion of the surface of the mold imparts a pattern, small features, or desired surface finish to the reshaped article.

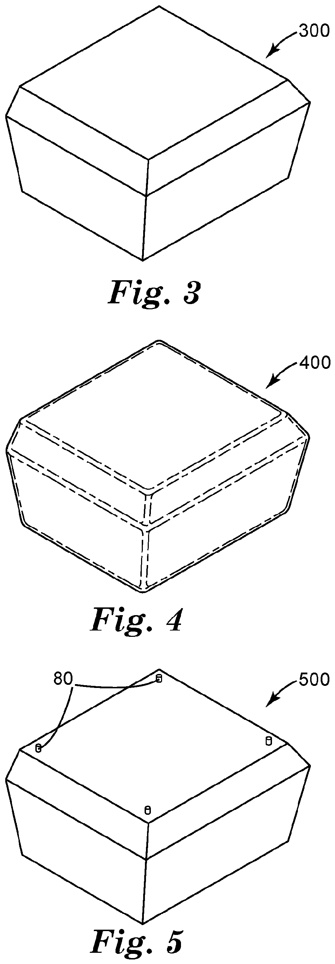

FIG. 3 is a perspective view of an exemplary article from the exemplary molding apparatus shown in FIG. 1. As shown in FIG. 3, the article 300 has assumed substantially the same shape as the mold cavity because the preform had substantially the same volume as the mold cavity.

FIG. 4 is a perspective view of an exemplary article from the exemplary molding apparatus shown in FIG. 1, wherein the preform had less volume than the mold cavity. As shown in FIG. 4, the body 400 assumed the same general shape of the mold cavity, but all of the outer edges contain radii due to the volume difference between the glass body preform and the mold cavity.

To achieve the desired reshaping, the void volume of the mold cavity is in the range of 70 to 130 percent of the volume of the preform. In some embodiments, the void volume of the mold cavity is at least 75 (or at least 80, 85, 90, 95, or even 100) percent of the volume of the preform. In some embodiments, the void volume of the mold cavity is 105 (or 110, 115, 120, 125, or even 130) percent of the volume of the preform. In some embodiments, the volume of the preform and the void volume of the mold cavity are substantially equal (i.e., less than 3% difference).

FIG. 5 is a perspective view of an exemplary article from the exemplary molding apparatus shown in FIG. 1 and a preform having more volume than the mold cavity. As shown in FIG. 5, reshaped article 500 contains flash 80. In the context of the present disclosure, "flash" refers to any excess material that is formed with and attached to the reshaped article and is present only because of limitations in the molding process, and is otherwise undesirable. In some embodiments, the flash is removed in a subsequent operation, such as, for example, a machining operation. In other embodiments, it is not necessary to remove the flash prior to utilizing the reshaped article.

In the context of the present disclosure, the term "void volume" of the cavity refers to the total volume of the cavity as determined when the portions of the mold (i.e., the components of the mold that move relative to one another to "open" and "close" the mold, or otherwise apply pressure to the preform), are at their most intimate position achieved when reshaping the preform, less any "cavity port volume." The term "cavity port volume" refers to any void feature in fluid communication with the cavity, such as, for example, holes, channels, slots, parting spaces, or other voids that do not affect the desired shape of the reshaped article except to the extent that the features correspond with flash. The features that make up the cavity port volume may exist for a number of reasons, including, for example, to transfer gases into or out of the mold, as passages for ejectors, or as flash volume for excess preform glass material.

The shape of the preform can be any geometric shape. In some embodiments, the preform is planar. In some embodiments, the preform approximates the shape of the desired reshaped article to reduce the amount of reshaping that must occur. In some embodiments, multiple reshaping operations are conducted to achieve the desired shape. In yet further embodiments, additional preforms can be added during a shaping or reshaping process to prepare articles with regions that vary in properties (e.g., color, composition, crystallinity, hardness, transparency, etc.). The regions can represent layers or discrete portions within the finished article.

In some embodiments, are relatively reshape small preforms (i.e., less than about 10 mm$^3$), while in others,

relatively larger preforms (i.e., greater than about 10 mm$^3$).

In some embodiments, the heating with respect to consolidating or reshaping the glass-ceramic, is conducted in a range from 1000°C to 1500°C (in some embodiments, in a range from 1050°C to 1500°C, 1100°C to 1500°C, 1150°C to 1500°C, 1200°C to 1500°C, 1250°C to 1500°C, 1300°C to 1500°C, 1350°C to 1500°C, 1400°C to 1500°C, 1300°C to 1400°C, or even 1200°C to 1400°C).

In some embodiments, the heating with respect to consolidating or reshaping the glass-ceramic, is conducted at a temperature at least 100 (in some embodiments, at least 150, 200, 250, 300, 350 or even 400; in some embodiments in a range from 100 to 400, 200 to 400, 200 to 300, or even 250 to 350) °C above the crystallization temperature ($T_x$, as measured by DTA) of the glass in the glass-ceramic.

In some embodiments, at least of portion of the heating, with respect to consolidating or reshaping the glass-ceramic, is conducted at pressure at least 0.01 (in some embodiments, at least 0.02, 0.05, 0.1, 0.5, 1, 2.5, 5, 10, or even at least 20; in some embodiments, in a range from 0.01 to 20, 0.02 to 20, 0.05 to 20, 0.1 to 20, 0.5 to 20, or even 1 to 20) MPa.

In some embodiments, the heating in consolidating or reshaping the glass-ceramic, is conducted for a time of at least 30 seconds (in some embodiments, at least 45 seconds, 1 minute, or even at least 3 hours; in some embodiments, in a range from 30 seconds to 3 hours, 45 seconds to 3 hours, or even 1 minute to 3 hours).

Crystals formed by heat-treating amorphous to provide the glass-ceramic may have, for example, acicular, equiaxed, columnar, or flattened splat-like features. The crystalline ceramic may also have, for example, acicular, equiaxed, columnar, or flattened splat-like features.

Typically, the (true) density, sometimes referred to as specific gravity, of the glass-ceramic and/or crystalline ceramic is typically at least 70% (in some embodiments, at least 75%, 80%, 85%, 90%, 92%, 95%, 96%, 97%, 98%, 99%, 99.5% or even 100%) of theoretical density.

In some embodiments, the glass-ceramic and/or crystalline ceramic has an average microhardness of at least 10 (in some embodiments, at least 11, 12, 13, 14, 15, 16, 17, or even at least 18; in some embodiments, in a range from 10 to 18, or even 12 to 15) GPa.

Exemplary articles made by a method described herein include electronics enclosure (e.g., a watch case, cellular phone case, or a tablet case).

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

Example 1

A 12-gallon (about 45-liters) mixer was charged with 53 kilograms of powders (as shown in Table 1), 27 kilograms of water, and 1.6 kilogram of dispersant (obtained from GEO Specialty Chemicals, Ampler, PA, under trade designation "DAXAD 30") and were high-shear mixed using a high-shear mixer (obtained under the trade designation "15 HP DISPERSER" from Hockmeyer, Harrison, NJ) for 15 minutes at 2000 rpm. The material was then filled into 5-gallon (18.9-liter) buckets and allowed to sit overnight to complete the exotherm caused by the combination of $La_2O_3$ and water.

The resulting slurry was then twice passed through a high-energy bead mill (obtained from Netzsch Instruments, Selb, Germany, as Model LMZ2) loaded with 0.5-millimeter yttria stabilized zirconia (YSZ) milling media (obtained from Tosoh, Tokyo, Japan) rotating at 2000 rounds per minute (rpm) at 400 grams per minute to achieve intimate mixing and reduce the 90$^{th}$ percentile of the particle size distribution below 1 micrometer.

Table 1

| Material | Amount, grams | Description |
|---|---|---|
| $La_2O_3$ | 23,000 | Lanthana powder, 1.2 micrometer particle size, 99.99 % purity, obtained from Treibacher Industrie AG, Althofen, Austria |
| $SiO_2$ | 630 | Silica powder, 0.3 micrometer particle size, 99.7 % purity, obtained from Vitro Minerals, Jackson, TN, under trade designation "RS50" |
| $Al_2O_3$ | 20,000 | Alumina powder, 1.0 micrometer particle size, 99.7 % purity, obtained from Almatis GmbH, Bauxite, AR, under trade designation "A1000" |
| $ZrO_2$ | 8,600 | Zirconia powder, 40 nanometer particle size, 99.5 % purity, obtained from Tosoh, Tokyo, Japan, under trade designation "HSY-3" |

About 20 kilograms of slurry was spray-dried (obtained from SDS Spray Drying, Randallstown, MD, as Model 48) and screened to provide agglomerates with sizes ranging from about 63 to 180 micrometers. The spray dryer was 4 feet (1.2 meters) in diameter with 8 foot (2.4 meters) straight sides. The spray dryer was operated in open mode (the system was not closed loop - air was introduced into the heater via a 1 horse power blower (obtained from Air Tech Inc., Englewood, NJ) and exhausted directly after exiting the baghouse. During operation the bulk drying gas was heated via an electric heater and carried through the drying chamber (entered through the top and exited through the bottom) and finally to a cyclone and a baghouse. The cyclone separated the product solids from the gas stream; the solids collected in the baghouse were discarded. The bulk drying gas temperature at the drying chamber inlet was about 180°C while the outlet of the drying chamber was about 100°C. The slurry was provided at about 117 grams per minute via a pneumatic peristaltic pump (obtained from Masterflex, Vernon Hills, IL, under the trade designation "96410-25") with two platinum-cured silicone tubing lines in parallel. The slurry was atomized vertically upward utilizing internally mixed two-fluid pressure spray atomizing nozzles (obtained from Spraying Systems Co., Wheaton, IL, under the trade designations "FLUID CAP 60100" and "AIR CAP 170"). The atomizing gas was nitrogen, provided at about 10 psi (0.07 MPa) and 3.3 standard cubic feet per minute (90 standard liters per minute (SLPM)).

A portion of the spray-dried particles was fed into a hydrogen/oxygen torch flame to generate melted glass beads. The torch used to melt the particles was a bench burner (obtained from Bethlehem Apparatus Co., Hellertown, PA, under trade designation "PM2D MODEL B"). The flows of hydrogen and oxygen were set at the following rates. For the inner ring, the hydrogen flow rate was 8 SLPM and the oxygen flow rate was 3 SLPM. For the outer ring, the hydrogen flow rate was 23 SLPM and the oxygen flow rate was 9.8 SLPM. The dried and sized particles were fed directly into the torch flame, where they were melted and transported to an inclined stainless-steel surface (about 51 centimeters (20 inches) wide with the slope angle of 45 degrees) with cold water running (about 8 liters/minute) over the surface to form quenched beads.

The resulting quenched beads were collected in a pan and dried at 110°C. The beads were transparent and spherical in shape.

For differential thermal analysis (DTA), a fraction of the bead material was screened to retain the 90-125 micrometer size range. DTA runs were made using thermal analysis equipment (obtained from Netzsch Instruments, under the trade designation "NETZSCH DSC 404F1"). The amount of each screened sample (100 milligrams) placed in a platinum sample pan. Each sample was heated in static air at a rate of 20°C/minute from room temperature (about 25°C) to 1600°C.

Referring to FIG. 6, line 602 is the plotted DTA data for the Example 1 glass bead material. Referring to FIG. 6, line 602, the material exhibited an endothermic event at temperature around 840°C. It was believed that this event was due to the glass transition, $T_g$, of the material. At about 934°C, an exothermic event was observed. It was believed that this event was due to the crystallization, $T_x$, of the material.

100 grams of the glass beads were placed in a furnace (obtained from Deltech Inc., Denver, CO, as Model DT-31-FL6) and heat-treated at 1 100°C for 1 hour. Referring to FIG. 6, line 601 is the plotted DTA data for the Example 1 material heat-treated at 1100°C. Referring to FIG. 6, line 601, the material did not exhibit an endothermic event. This was the evidence that the heat-treated material did not have a $T_g$.

Grain size and degree of crystallinity of the heat-treated beads was determined by Field Emission Scanning Electron Microscopy (FE-SEM) (obtained from Hitachi Ltd., Maidenhead, UK, under trade designation "HITACHI S-4800"). Fractured surfaces of heat-treated beads were coated by a thin layer of Au-Pd to make the sample conductive. Images (i.e., electron micrographs) were obtained while operating at 2.0 or 5.0 kilovolts with a magnification of 150,000 times. FE-SEM micrographs with 150,000 magnification were used for grain size measurement. Three or four micrographs taken from different areas of the sintered body were analyzed for each sample. Ten horizontal lines, which were spaced at roughly equal intervals across the height of a micrograph were drawn. The number of grain boundary intercepts observed on each line were counted and used to calculate the average distance between intercepts. The average distance for each line was multiplied by 1.56 to determine grain size and this value was averaged over all the lines for all micrographs of each sample. Average crystal size of heat-treated Example 1 material was determined to be 57 nm.

About 5 grams of the heat-treated beads were placed in a circular graphite die with an outside diameter of 160 millimeters, an inside diameter of 20 millimeters, and a height of 100 millimeters (graphite obtained from Mersen, St. Marys, PA, and then machined to the specified inside dimensions) and hot-pressed using a uniaxial pressing apparatus (obtained from Thermal Technology Inc., Brea, CA, under the trade designation "HP-50"). The hot-pressing was carried out at using continuous heating at 5°C/minute in an argon atmosphere and 13.8 megapascals (MPa) (2000 pounds per square inch (2 ksi)) pressure. Shrinkage displacement associated with densification was monitored. Initial shrinkage temperature was 1120°C. The shrinkage continued until temperature reached 1200°C at which point the shrinkage stopped. The resulting consolidated disk was about 20 millimeters in diameter, and about 3 millimeters thick. Additional hot-press runs were performed to make additional disks.

The density of the resulting hot-pressed glass material was measured using a gas pycnometer (obtained from Micromeritics, Norcross, GA, under the trade designation "ACCUPUYC 1330") and found to be 5.25 grams/cm$^3$, which is 99 percent of theoretical density.

The average microhardness of the resulting hot-pressed material was determined as follows. Pieces of the hot-pressed material (about 2-5 millimeters in size) were mounted in a mounting resin (obtained from Buehler Ltd., Lake Bluff, IL, under the trade designation "EPOMET"). The resulting cylinder of resin was about 2.5 centimeter (1 inch) in diameter and about 1.9 centimeter (0.75 inch) tall (i.e., high). The mounted samples were polished using a conventional grinder/polisher (obtained from Buehler Ltd., under the trade designation "BETA") and conventional diamond slurries with the final polishing step using a 1 micrometer diamond slurry (obtained from Buehler Ltd., under the trade designation "METADI") to obtain polished cross-sections of the sample.

The microhardness measurements were made using a conventional microhardness tester (obtained from Mitutoyo Corporation, Tokyo, Japan, under the trade designation "MITUTOYO MVK-VL") fitted with a Vickers indenter using a 500-gram indent load. The microhardness measurements were made according to the guidelines stated in ASTM Test Method E384 Test Methods for Microhardness of Materials (1991). The average microhardness of the hot-pressed material, based on an average of 5 measurements, was 15.4 gigapascals (GPa).

Example 2

The materials are in the amounts listed in Table 2, below, were combined with 904 grams of water to provide a master batch aqueous suspension.

Table 2

| Material | Amount, grams | Description |
|---|---|---|
| $Al_2O_3$ | 541 | Alumina powder (0.5 micrometer particle size, 99.8 % purity) obtained from Alcoa AG, Point Comfort, TX, under trade designation "16-SG" |
| $TiO_2$ | 514 | Titania powder (1.0 micrometer particle size, 98.5 % purity) obtained from Kronos, Chelmsford, MA, under trade designation "KRONOS 1000" |
| Zircon | 339 | Zircon sand (20 micrometer particle size, 98% purity) obtained from Reade, East Providence, RI |
| Talc | 267 | Magnesium silicate monohydrate powder (2 micrometer particle size, 99.5% purity) obtained from Alfa Aesar, Ward Hill, MA |
| Calcium Carbonate | 311 | Calcium carbonate powder (99.5% purity, particle size of 3.2 micrometers) obtained from Huber Materials, Edison, NJ, under trade designation "G2" |
| Cell Gum | 24 | Sodium carboxymethylcellulose, (99.5% purity) obtained from Hercules Incorporated Aqualon Division, Wilmington, DE, under trade designation "7L2" |
| Dispersant | 39 | Sodium polymethacrylate solution (99.5% purity) obtained from Geo Specialty Chemicals, Ambler, PA, under trade designation "DAXAD 30" |

The cell-gum was added to the water very slowly, and fully dissolved with 30 minutes of mixing with a high shear mixer (obtained from Hayward Gordon, Adelanto, CA, under the trade designation "SCOTT TURBIN;" Model M1110SE) at 1800 rpm. Next, the dispersant was added before the powders were added individually. The mixture was then ball milled at 100 rpm in an aluminum oxide mill jar with 1 cm cylindrical alumina media (obtained from Glenn Mills, Clifton, NJ) for 24 hours to make a homogeneous suspension with the 90th percentile of the particle size of under 2 micrometers.

The slurry was spray-dried ("Model 48") and screened to provide agglomerates with sizes ranging from about 63 to 180 micrometers.

A portion of the spray-dried particles was fed into a hydrogen/oxygen torch flame to generate melted glass beads. The torch used to melt the particles was a bench burner (obtained from Bethlehem Apparatus Co., Hellertown, PA, under trade designation "PM2D MODEL B"). The flows of hydrogen and oxygen were set at the following rates. For the inner ring, the hydrogen flow rate was 8 standard liters per minute (SLPM) and the oxygen flow rate was 3 SLPM. For the outer ring, the hydrogen flow rate was 23 (SLPM) and the oxygen flow rate was 9.8 SLPM. The dried and sized particles were fed directly into the torch flame, where they were melted and transported to an inclined stainless-steel surface (about 51 centimeters (20 inches) wide with the slope angle of 45 degrees) with cold water running (about 8 liters/minute) over the surface to form quenched beads.

The resulting quenched beads were collected in a pan and dried at 110°C. The beads were transparent and spherical in shape.

100 grams of the flame-formed beads were placed in a furnace (Model DT-31-FL6), and heat-treated at 1050°C for 1 hour with heating and cooling rates of 20°C per minute.

About 5 grams of the heat-treated beads were placed in a circular graphite die with an outside diameter of 160 millimeters, an inside diameter of 20 millimeters, and a height of 100 millimeters (graphite obtained from Mersen), and then machined to the specified inside dimensions) and hot-pressed using a uniaxial pressing apparatus ("HP-50"). The hot-pressing was carried out using continuous heating at 5°C/minute in an argon atmosphere and 20 megapascals (MPa) (3000 pounds per square inch (3 ksi)) pressure. Shrinkage displacement associated with densification was monitored. Initial shrinkage temperature was 1110°C. The shrinkage continued until temperature reached 1210°C at which point the shrinkage stopped. The resulting consolidated disk was about 20 millimeters in diameter, and about 3 millimeters thick. The disk had a density of 99 percent of theoretical density determined as described in Example 1.

Example 3

Example 3 samples were prepared as described for Example 2, except that the materials for aqueous the master batch are shown in Table 3, below.

Table 3

| Material | Amount, grams | Description |
|---|---|---|
| $Al_2O_3$ | 811 | Alumina powder (0.5 micrometer particle size, 99.8 % purity) obtained from Alcoa AG, under trade designation "16-SG" |
| $SiO_2$ | 247 | Silica powder (0.25 micrometer particle size, 99.5 % purity) obtained from US Silica Co, Berkeley Springs, WV, under trade designation "SIL-CO-SIL" |
| $ZrO_2$ | 913 | Zirconium (IV) oxide powder (1.6 micrometer particle size, 98.7 % purity) obtained from Z Tech LLC, Bow, NH, under trade designation "CF-PLUS-HM" |
| Cell Gum | 24 | Sodium carboxymethylcellulose ("7L2") |
| Dispersant | 39 | Sodium polymethacrylate solution, ("DAXAD 30") |

100 grams of flame-formed beads were heated and hot-pressed as described in Example 2. About 5 grams of the heat-treated beads were placed in a circular graphite die with an outside diameter of 160 millimeters, an inside diameter of 20 millimeters, and a height of 100 millimeters (graphite obtained from Mersen, and machined to provide the specified inside dimensions) and hot-pressed using a uniaxial pressing apparatus ("HP-50"). The hot-pressing was carried out using continuous heating at 5°C/minute in an argon atmosphere and 20 megapascals (MPa) (3000 pounds per square inch (3 ksi)) pressure. Shrinkage displacement associated with densification was monitored. Initial shrinkage temperature was 1110°C. Initial shrinkage temperature was 1120°C. The shrinkage continued until temperature reached 1220°C at which point the shrinkage stopped. The resulting consolidated disk was about 20 millimeters in diameter, and about 3 millimeters thick and was 99% of theoretical density, determined as described in Example 1.

Example 4

A flat, 0.7-millimeter thick sheet of glass was prepared by hot-pressing 50 grams of glass beads prepared as described in Example 1 in a 75-millimeter circular graphite die (obtained from Mersen) enclosed in a shroud obtained in a uniaxial pressing apparatus ("HP-50") at a temperature of 930°C and a load of 20,000 kilograms for 40 minutes.

The puck was then polished down using a conventional grinder/polisher (obtained from Buehler Ltd., under the trade designation "BETA") and conventional diamond slurries with the final polishing step using a 1 micrometer diamond slurry (obtained from Buehler Ltd., under the trade designation "METADI") to obtain polished cross-sections of the sample to 0.7 millimeter and water-jet cut into a 58 x 44-millimeter sheet. The flat sheet was then placed between two flat alumina 100 by 80 mm sheets (obtained from Coorstek, Golden, CO) in a large box furnace (obtained from Carbolite Gero, Ltd., Newtown, PA, under the trade designation "CARBOLITE RH1-1500") and heated using the following profile: 20°C to 830°C at 3°C/minute, held at 830°C for 2 hours, 830°C to 875°C at 1°C/minute, held at 875°C for 2 hours, 875°C to 900°C at 1°C/minute, held at 900°C for 2 hours, 900°C to 1000°C at 1°C/minute, held at 1000°C for 1 hour, 1000°C to 1150°C at 3°C/minute, held at 1150°C for 1 hour, and 1150°C to 20°C at 3°C/minute.

The average microhardness of the resulting nanocrystalline glass-ceramic sheet was measured as described in Example 1. The average microhardness, based on an average of 5 measurements, was 14 GPa.

The 44 × 58-millimeter nanocrystalline glass-ceramic sheet was then placed in a rectangular 3-dimensional (3D) graphite mold about 80 × 60 millimeter on the outside and 44 × 58 millimeter on the inside with a beveled edge resulting in a final molded glass height of about 2 millimeters (graphite obtained from Mersen, and machined to provide the specified inside dimensions) inside a hot press in a $N_2$ environment ("HP-50"). It was heated to 950°C at a rate of 15°C/minutes, held at 950°C for 1.5 hour, and then heated to 1200°C at a rate of 10°C/minute. After 10 minutes at temperature 20 kilograms of load were applied to the sample.

Displacement of the press was tracked and whenever the part moved by 0.1 millimeter another 10 kilograms of load were applied up to a final load of 150 kilograms. The total displacement equaled 1.6 millimeter over an hour, after which the furnace was ramped down at 2°C/minutes to 800°C and then at 15°C/minutes to room temperature.

The resulting three-dimensional part showed some discoloration from its interaction with the graphite mold. The density of the three-dimensional part was 99% of theoretical density as determined by Archimedes method according to ASTM D116-86 (2016).

To produce the final, white ceramic, the three-dimensional sheet was placed inside a furnace (Model DT-31-FL6) with 700 grams of mass provided by an alumina crucible (obtained from Coorstek) filled with 3 mm YSZ milling media (obtained from Tosoh, Tokyo, Japan) holding down the flat center to prevent buckling, and heated from room temperature to 1300°C at a rate of 10°C per minute, held at 1300°C for 2 hours, and then ramped down to room temperature at 10°C/minute.

Example 5

A 0.6-millimeter thick flat glass sheet prepared as described in Example 4 was placed in a die to assist with 200 grams placed on top of the die to assist with slumping. It was heated to 800°C in 20 minutes, held for 20 minutes at 800°C, heated to 823°C in 10 minutes, held for 30 minutes at 823°C, ramped to 828°C in 5 minutes, held at 828°C for 30 minutes, and then cooled to room temperature in 30 minutes.

The sheet was then crystallized on a flat alumina sheet in a large box furnace ("CARBOLITE RH1-1500"). It was heated at 3°C/minute to 820°C, held for 2 hours at 820°C, ramped to 875°C at 1°C/minute, held at 875°C for 2 hours, heated to 900°C at 1°C/minute, held at 900°C for 2 hours, heated to 1200°C at 1°C/minute, held at 1200°C for 2 hours, and cooled from 1200°C to room temperature at 1°C/minute. The density of the resulting three-dimensional shaped glass-ceramic sheet was 99% of theoretical density as determined by Archimedes density according to ASTM D116-86 (2016).

The three-dimensional glass-ceramic sheet with dimensions of about 44-millimeter wide and 58-millimeter long with rounded corners and having edges bent upward to provide a total part height of about 2 millimeters and further having a domed central region (first shape). The part was placed on a flat alumina block in a furnace (Model DT-31-FL6). A second alumina block about 50-millimeter wide and 37-millimeter long (obtained from Coorstek) and additional mass totaling 700 grams, provided by an alumina crucible (obtained from Coorstek) filled with 3 mm YSZ milling media (obtained from Tosoh), (about 3 kPa pressure) was placed centrally on top of the glass-ceramic sheet. The furnace was heated to 1300°C at a rate of 3.5°C/minute, and held for 4 hours. After the heating process, the initially domed central region of the glass-ceramic was substantially flat (second shape).

Example 6

Example 6 was prepared as described for Example 4 except (a) the flat sheet was heated using the following profile: 20°C to 830°C at 3°C/minute, held for 2 hours, 830°C to 875°C at 1°C/minute, held for 2 hours, 875°C to 900°C at 1°C/minute, held for 2 hours, 900°C to 1000°C at 1°C/minute, held for 1 hour 1000°C to 1400°C at 3°C/minute, held at 1400°C for 1 hour, and 1400°C to 20°C at 3°C/minute; and (b) the glass-ceramic sheet was heated to 1350°C at a rate of 10°C/minute, held at 1350°C for 1.5 hours, and then cooled to room temperature at 10°C/minute; and (c) instead of applying 20 kilogram of load to the sample, a 1 kilogram graphite rod (obtained from Mersen) was placed on the mold before starting the furnace.

The resulting three-dimensional part was 100% formed (it was fully conformed to the graphite mold). It showed some discoloration from its interaction with the graphite mold. The density of the three-dimensional part was 99% of theoretical density as determined by Archimedes method according to ASTM D116-86 (2016).

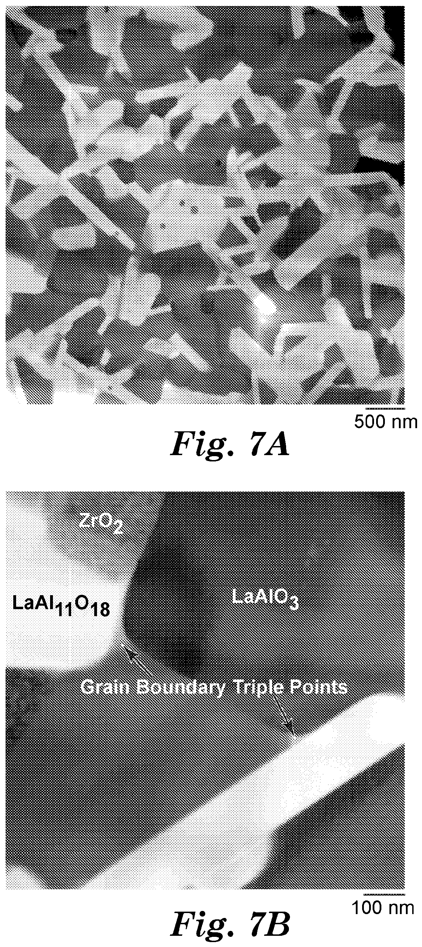

FIG. 7A and 7B are Scanning Transmission Electron Microscope (STEM) Bright Field Digital Images of a focused ion-beam (FIB) milled section of the heat-treated Example 6 material. FIG. 7A shows crystalline $ZrO_2$ and rare earth aluminate (instrument magnification 20,000X). FIG. 7B shows $ZrO_2$, $LaAl_{11}O_{18}$, and $LaAlO_3$ phases, along with an amorphous intergranular phase (instrument magnification 110,000X). The TEM thin section was prepared using traditional FIB sample preparation techniques. More specifically, a thin layer of gold-palladium was deposited to mark the surface of the sample, followed by focused-beam ion milling using the standard lift-out technique on a FIB Scanning Electron Microscope (SEM) (obtained under the trade designation "FEI QUANTA 200 3D DUAL BEAM SEM/FIB" from FEI Company, Hillsboro, OR).

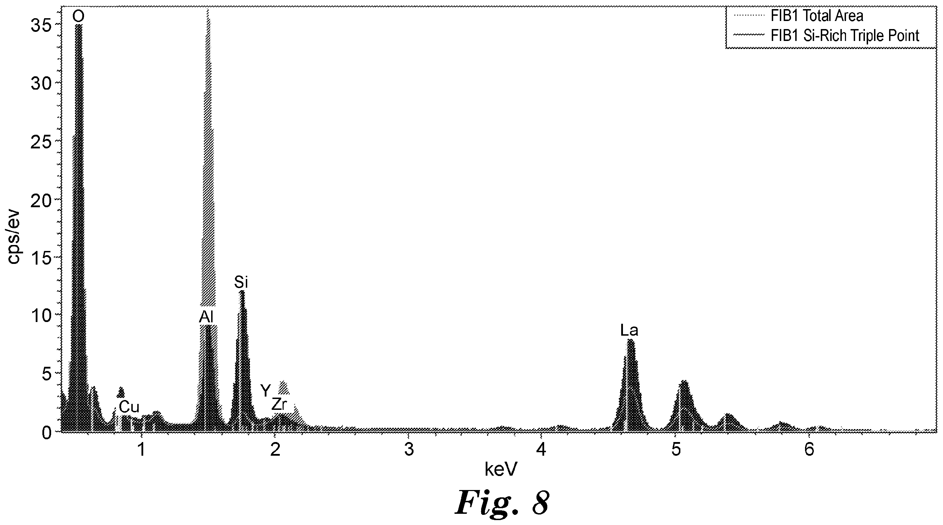

The composition of the amorphous intergranular phase (see FIG. 8) was determined using elemental x-ray mapping using x-ray data collected by energy dispersive X-ray spectroscopy (obtained under the trade designation "FEI OSIRIS S/TEM" from Bruker Corporation, Billerica, MA) with a detector (obtained under the trade designation "SUPER X EDS from Bruker Corporation). The analysis was completed using the x-ray microanalysis software (obtained under the trade designation "ESPIRIT 1.9" from Bruker Corporation). The X-ray map in FIG. 8 was collected for 33 minutes (using image drift correction) at 110,000X magnification at an accelerating voltage of 200keV. Sub-sections of the x-ray map were highlighted, and the spectral data within compared with other highlighted regions. Thus, grain-by-grain comparisons could be made in the same image.

Example 7

A 2-liter mixer was charged with 1 kilogram of powders (as shown in Table 4, below), 500 grams of water, and 25gram of dispersant ("DAXAD 30") and were high-shear mixed using a high-shear mixer ("SCOTT TURBIN;" Model M1110SE) for 15 minutes at 2000 rpm.

Table 4

| Material | Amount, grams | Description |
|---|---|---|
| La$_2$O$_3$ | 445 | Lanthana powder, 1.2 micrometer particle size, 99.99 % purity, obtained from Treibacher Industrie AG, Althofen, Austria |
| Al$_2$O$_3$ | 388 | Alumina powder, 1.0 micrometer particle size, 99.7 % purity, obtained under trade designation "A1000" from Almatis GmbH, Bauxite, AR |
| ZrO$_2$ | 167 | Zirconia powder, 40 nanometer particle size, 99.5 % purity, obtained under trade designation "HSY-3" from Tosoh |

The material was then filled into a 1-liter jar and allowed to sit overnight to complete the exotherm caused by the combination of La$_2$O$_3$ and water.

The resulting slurry was then milled in a high-energy bead mill (obtained from Buhler, Uzwil, Switzerland, as Model PML2) loaded with 0.1-millimeter yttria stabilized zirconia (YSZ) milling media (obtained from Tosoh, Tokyo, Japan) rotating at 1350 rounds per minute (rpm) for 2 hours achieve intimate mixing and reduce the 90$^{th}$ percentile of the particle size distribution below 1 micrometer.

The preparation of the flat preform and the final molded part were as described for Example 6. The sample was not fully formed after removal from the mold. It was only about 40% molded.

Example 8

A 2-liter mixer was charged with 1 kilograms of zirconia powder (40 nanometer particle size, 99.5 % purity; obtained under trade designation "HSY-3" from Tosoh), 500 grams of water, and 25 grams of dispersant ("DAXAD 30") and was high-shear mixed using a high-shear mixer "SCOTT TURBIN;" Model M1110SE) for 15 minutes at 2000 rpm. The material was then filled into a 1-liter jar.

The resulting slurry was then milled in a high-energy bead mill (Model PML2) loaded with 0.1-millimeter yttria stabilized zirconia (YSZ) milling media (obtained from Tosoh) rotating at 1350 rounds per minute (rpm) for 2 hours achieve intimate mixing and reduce the 90$^{th}$ percentile of the particle size distribution below 1 micrometer.

The slurry was dried in an aluminum pan in a drying oven at 250°C overnight (obtained under trade designation "QMAX" from Despatch, Minneapolis, MN) and milled using a planetary ball mill (obtained under trade designation "E-MAX" from Retsch, Haan, Germany) for 2 hours at 1200 rpm using 5 mm zirconia media (obtained from Tosoh).

The preparation of the flat preform and the final molded part were as described for Example 6, except the temperature for the preparation of the ceramic preform was done at 1400°C. The sample was not fully formed after removal from the mold. It was only about 50% molded.

Example 9

A 2-liter mixer was charged with 1.09 kilogram of powder (as shown in Table 5, below), 500 grams of water, and 25 grams of dispersant ("DAXAD 30") and was high-shear mixed using a high-shear mixer "SCOTT TURBIN;" Model M1110SE) for 15 minutes at 2000 rpm. The material was then filled into a 1- liter jar.

Table 5

| Material | Amount, grams | Description |
|----------|---------------|-------------|
| $ZrO_2$ | 1000 | Zirconia powder, 40 nanometer particle size, 99.5 % purity, obtained under trade designation "HSY-3" from Tosoh |
| La2O3 | 30 | Lanthana powder, 1.2 micrometer particle size, 99.99 % purity, obtained from Treibacher Industrie AG, Althofen, Austria |
| SiO2 | 30 | Silica powder, 0.3 micrometer particle size, 99.7 % purity, obtained under trade designation "RS50" from Vitro Minerals, Jackson, TN |
| Al2O3 | 30 | Alumina powder, 1.0 micrometer particle size, 99.7 % purity, obtained under trade designation "A1000" from Almatis GmbH, Bauxite, AR |

The resulting slurry was then milled in a high-energy bead mill (Model PML2) loaded with 0.1-millimeter yttria stabilized zirconia (YSZ) milling media (obtained from Tosoh) rotating at 1350 rounds per minute (rpm) for 2 hours achieve intimate mixing and reduce the 90th percentile of the particle size distribution below 1 micrometer.

The slurry was dried in an aluminum pan in a drying oven at 250°C overnight ("QMAX") and milled using a planetary ball mill ("E-MAX") for 2 hours at 1200 rpm using 5 mm zirconia media (obtained from Tosoh).

The preparation of the flat preform and the final molded part were as described for Example 6, except the temperature for the preparation of the ceramic preform was done at 1400°C. The sample was not fully formed after removal from the mold. It was only about 50% molded.

Foreseeable modifications and alterations of this disclosure will be apparent to those skilled in the art without departing from the scope of this invention. This invention should not be restricted to the embodiments that are set forth in this application for illustrative purposes.

**Claims**

1. A ceramic comprising polycrystalline zirconia, a first polycrystalline rare earth aluminate, a second, different polycrystalline rare earth aluminate, and an amorphous phase comprising, on a theoretical oxides basis, $SiO_2$, $Al_2O_3$, and rare earth oxide, wherein the polycrystalline zirconia and the first and second polycrystalline rare earth aluminate comprise crystals with grain boundaries, wherein the crystals of the first crystalline rare earth aluminate are acicular, and wherein the amorphous phase is present at the grain boundaries.

2. The ceramic of claim 1, wherein the ceramic is in the form of a three-dimensional ceramic article, wherein the article has at least one portion having a bend radius of at 1 mm, wherein the article has a thickness of at least 0.3 mm.

3. The ceramic of either claim 1 or 2, wherein the first rare earth aluminate is at least one of $LaAlO_3$, $CeAlO_3$, $Er_3Al_5O_{12}$, $GdAlO_3$, or $Dy_3Al_5O_{12}$, and wherein the second rare earth aluminate is at least one of $LaAl_{11}O_{18}$ or $CeAl_{11}O_{18}$.

4. A method of forming a ceramic article of any claims 1 to 4, the method comprising:

   providing a ceramic preform (70) having a volume, a first shape, the ceramic preform (70) comprising polycrystalline zirconia, a first polycrystalline rare earth aluminate, a second, different polycrystalline rare earth aluminate, and an amorphous phase comprising, on a theoretical oxides basis, $SiO_2$, $Al_2O_3$, and rare earth oxide,
   providing a mold apparatus (10) comprising a first mold portion (20) having a mold surface (25) with a recessed portion (40) and a second mold portion (30) having a mold surface (35) with a recessed portion (50);
   positioning the preform (70) in a least a portion of the recessed portion (50) of the second mold portion (30);
   aligning the mold surface (25) of the first mold portion (20) with the mold surface (35) of the second mold portion (30); and
   heating the preform at sufficient temperature and sufficient pressure to form the article (300, 400, 500) having a second, different shape that assumes the shape of the mold cavity (60).

5. An article obtained by the method of claim 4, wherein the article is an electronics enclosure.

**Patentansprüche**

1. Eine Keramik, aufweisend polykristallines Zirkonoxid, ein erstes polykristallines Seltenerdaluminat, ein zweites, unterschiedliches polykristallines Seltenerdalum inat und eine amorphe Phase, aufweisend, auf einer theoretischen Oxidenbasis, $SiO_2$, $Al_2O_3$ und Seltenerdoxid, wobei das polykristalline Zirkonoxid und das erste und zweite polykristalline Seltenerdalum inat Kristalle mit Korngrenzen aufweisen, wobei die Kristalle des ersten kristallinen Seltenerdaluminats nadelförmig sind und wobei die amorphe Phase an den Korngrenzen vorhanden ist.

2. Die Keramik nach Anspruch 1, wobei die Keramik in der Form eines dreidimensionalen keramischen Gegenstands vorliegt, wobei der Gegenstand mindestens einen Abschnitt aufweist, der einen Biegeradius von bei 1 mm aufweist, wobei der Gegenstand eine Dicke von mindestens 0,3 mm aufweist.

3. Die Keramik nach Anspruch 1 oder 2, wobei das erste Seltenerdaluminat mindestens eines von $LaAlO_3$, $CeAlO_3$, $Er_3Al_5O_{12}$, $GdAlO_3$ oder $Dy_3Al_5O_{12}$ ist, und wobei das zweite Seltenerdalum inat mindestens eines von $LaAl_{11}O_{18}$ oder $CeAl_{11}O_{18}$ ist.

4. Ein Verfahren zum Ausbilden eines keramischen Gegenstands nach einem der Ansprüche 1 bis 4, das Verfahren aufweisend:

   Bereitstellen einer keramischen Vorform (70), die ein Volumen, eine erste Form aufweist, die keramische Vorform (70) aufweisend polykristallines Zirkonoxid, ein erstes polykristallines Seltenerdaluminat, ein zweites, unterschiedliches polykristallines Seltenerdaluminat und eine amorphe Phase, aufweisend, auf einer theoretischen Oxidenbasis, $SiO_2$, $Al_2O_3$ und Seltenerdoxid;
   Bereitstellen einer Formeinrichtung (10), aufweisend einen ersten Formabschnitt (20), der eine Formoberfläche (25) mit einem vertieften Abschnitt (40) und einen zweiten Formabschnitt (30) aufweist, der eine Formoberfläche (35) mit einem vertieften Abschnitt (50) aufweist;
   Positionieren der Vorform (70) in einem mindestens einen Abschnitt des vertieften Abschnitts (50) des zweiten Formabschnitts (30);
   Ausrichten der Formoberfläche (25) des ersten Formabschnitts (20) mit der Form oberfläche (35) des zweiten Formabschnitts (30); und
   Erwärmen der Vorform bei ausreichender Temperatur und ausreichendem Druck, um den Gegenstand (300, 400, 500) auszubilden, der eine zweite, unterschiedliche Form aufweist, die die Form des Formhohlraums (60) annimmt.

5. Ein Gegenstand, der durch das Verfahren nach Anspruch 4 erhalten wird, wobei der Gegenstand ein Elektronikgehäuse ist.

**Revendications**

1. Céramique comprenant une zircone polycristalline, un premier aluminate de terre rare polycristallin, un deuxième aluminate de terre rare polycristallin, différent, et une phase amorphe comprenant, sur une base d'oxyde théorique, $SiO_2$, $Al_2O_3$ et un oxyde de terre rare, dans lequel la zircone polycristalline et les premier et deuxième aluminates de terre rare polycristallins comprennent des cristaux avec des joints de grains, dans laquelle les cristaux du premier aluminate de terre rare cristallin sont aciculaires, et dans laquelle la phase amorphe est présente au niveau des joints de grains.

2. Céramique selon la revendication 1, dans laquelle la céramique est sous la forme d'un article tridimensionnel en céramique, dans laquelle l'article a au moins une partie ayant un rayon de courbure d'au 1 mm, dans laquelle l'article a une épaisseur d'au moins 0,3 mm.

3. Céramique selon la revendication 1 ou la revendication 2, dans laquelle le premier aluminate de terre rare est au moins un parmi $LaAlO_3$, $CeAlO_3$, $Er_3Al_5O_{12}$, $GdAlO_3$ ou $Dy_3Al_5O_{12}$, et dans laquelle le deuxième aluminate de terre rare est au moins un parmi $LaAl_{11}O_{18}$ ou $CeAl_{11}O_{18}$.

4. Procédé de formation d'un article en céramique selon l'une quelconque des revendications 1 à 4, le procédé comprenant :

la fourniture d'une préforme en céramique (70) ayant un volume, une première forme, la préforme en céramique (70) comprenant de la zircone polycristalline, un premier aluminate de terre rare polycristallin, un deuxième aluminate de terre rare polycristallin, différent, et une phase amorphe comprenant, sur une base d'oxyde théorique, $SiO_2$, $Al_2O_3$ et un oxyde de terre rare ;

la fourniture d'un appareil de moulage (10) comprenant une première partie de moule (20) ayant une surface de moule (25) avec une partie évidée (40) et une deuxième partie de moule (30) ayant une surface de moule (35) avec une partie évidée (50) ;

le positionnement de la préforme (70) dans au moins une partie de la partie évidée (50) de la deuxième partie de moule (30) ;

l'alignement de la surface de moule (25) de la première partie de moule (20) avec la surface de moule (35) de la deuxième partie de moule (30) ; et

le chauffage de la préforme à température suffisante et pression suffisante pour former l'article (300, 400, 500) ayant une deuxième forme, différente, qui prend la forme de la cavité de moule (60).

5. Article obtenu par le procédé selon la revendication 4, dans lequel l'article est un coffret électronique.

*Fig. 1*

*Fig. 2*

Fig. 3

Fig. 4

Fig. 5

*Fig. 6*

EP 3 621 935 B1

*Fig. 7A*

500 nm

*Fig. 7B*

100 nm

*Fig. 8*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62667985
- US 62505377 B
- US 7625509 B, Rosenflanz
- US 2005137078 A
- US 7563294 B, Rosenflanz
- US 7501000 B, Rosenflanz
- US 7501001 B, Rosenflanz
- US 7168267 B, Rosenflanz
- US 7101819 B, Rosenflanz
- US 7147544 B, Rosenflanz
- US 7510585 B, Rosenflanz
- US 7563293 B, Rosenflanz
- US 7737063 B, Rosenflanz
- US 7507268 B, Rosenflanz
- US 8056370 B, Rosenflanz
- US 7497093 B, Rosenflanz
- US 8003217 B, Rosenflanz
- US 7297171 B, Rosenflanz
- US 7598188 B, Rosenflanz
- US 7281970 B, Endres
- US 20070256454, Rosenflanz
- US 20070270299 A, Rosenflanz
- US 20110253582 A, Lenius
- US 2150694 A, Morey
- US 6254981 B, Castle
- US 5605870 A, Strom-Olsen
- WO 0127046 A1

### Non-patent literature cited in the description

- **ROSENFLANZ et al.** Bulk Glasses and Ultrahard Nanoceramics Based on Alumina and Rare-Earth Oxides. *Nature,* 2004, vol. 430, 761-64
- Rapid Solidification of Ceramics. **BROCKWAY et al.** Metals And Ceramics Information Center. A Department of Defense Information Analysis Center, January 1984
- **ROSENFLANZ et al.** Bulk glasses and ultrahard nanoceramics based on alumina and rare-earth oxides. *Nature,* 2004, vol. 430, 761-64
- **TOPOL, L.E. et al.** Formation of new oxide glasses by laser spin melting and free fall cooling. *J. Non-Crystal. Solids,* 1973, vol. 12, 377-390
- **TOPOL, L.E.** Formation of new lanthanide oxide glasses by laser spin melting and free-fall cooling. *J. Non-Crystall. Solids,* 1974, vol. 15, 116-124
- **SHISHIDO T. et al.** Ln-M-O'' glasses obtained by rapid quenching using laser beam. *J. Mater. Sci.,* 1978, vol. 13, 1006-1014
- **TATSUMISAGO M.** Infrared Spectra of Rapidly Quenched Glasses in the Systems, $Li_2O$-RO-$Nb_2O_5$ (R=Ba, Ca, Mg). *J. Amer. Ceram. Soc.,* 1983, vol. 66 (2), 117-119
- **BROCKWAY et al.** Rapid Solidification of Ceramics. Metals And Ceramics Information Center, A Department of Defense Information Analysis Center, January 1984
- **P. W. MCMILLAN.** Glass-Ceramics. Academic Press, Inc, 1979